(19) Europäisches Patentamt / European Patent Office / Office européen des brevets

(11) **EP 4 588 043 B1**

(12) **EUROPEAN PATENT SPECIFICATION**

(45) Date of publication and mention
of the grant of the patent:
**08.07.2026 Bulletin 2026/28**

(21) Application number: **23762543.9**

(22) Date of filing: **06.09.2023**

(51) International Patent Classification (IPC):
*G10L 19/008* (2013.01)

(52) Cooperative Patent Classification (CPC):
**G10L 19/008**

(86) International application number:
**PCT/EP2023/074383**

(87) International publication number:
**WO 2024/056475 (21.03.2024 Gazette 2024/12)**

(54) **GENERATION OF MULTICHANNEL AUDIO SIGNAL AND DATA SIGNAL REPRESENTING A MULTICHANNEL AUDIO SIGNAL**

ERZEUGUNG EINES MEHRKANALIGEN AUDIOSIGNALS UND DATENSIGNAL ZUR DARSTELLUNG EINES MEHRKANALIGEN AUDIOSIGNALS

GÉNÉRATION D'UN SIGNAL AUDIO MULTICANAL ET SIGNAL DE DONNÉES REPRÉSENTANT UN SIGNAL AUDIO MULTICANAL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.09.2022 EP 22195255**

(43) Date of publication of application:
**23.07.2025 Bulletin 2025/30**

(73) Proprietor: **Koninklijke Philips N.V.**
**5656 AE Eindhoven (NL)**

(72) Inventors:
• **SCHUIJERS, Erik Gosuinus Petrus**
**5656 AG Eindhoven (NL)**
• **GALLUCCI, Alessio**
**5656 AG Eindhoven (NL)**

(74) Representative: **Philips Intellectual Property & Standards**
**High Tech Campus 34**
**5656 AE Eindhoven (NL)**

(56) References cited:
**US-A1- 2021 191 685     US-A1- 2021 204 085**

• **"Spatial Audio Processing", 1 January 2007, JOHN WILEY & SONS, LTD, England, article JEROEN BREEBAART ET AL: "Spatial Audio Processing - Ch. 6 MPEG Surround", pages: 93 - 115, XP055152635**
• **PARK SU YEON ET AL: "Subband-based upmixing of stereo to 5.1-channel audio signals using deep neural networks", 2016 INTERNATIONAL CONFERENCE ON INFORMATION AND COMMUNICATION TECHNOLOGY CONVERGENCE (ICTC), IEEE, 19 October 2016 (2016-10-19), pages 377 - 380, XP033015750, DOI: 10.1109/ICTC.2016.7763500**

# EP 4 588 043 B1

**Description**

FIELD OF THE INVENTION

The invention relates to generation of multichannel audio signals and/or a data signal representing a multichannel audio signals, and in particular, but not exclusively, to encoding and/or decoding of stereo signals.

BACKGROUND OF THE INVENTION

Spatial audio applications have become numerous and widespread and increasingly form at least part of many audiovisual experiences. Indeed, new and improved spatial experiences and applications are continuously being developed which results in increased demands on the audio processing and rendering.

For example, in recent years, Virtual Reality (VR) and Augmented Reality (AR) have received increasing interest and a number of implementations and applications are reaching the consumer market. Indeed, equipment is being developed for both rendering the experience as well as for capturing or recording suitable data for such applications. For example, relatively low cost equipment is being developed for allowing gaming consoles to provide a full VR experience. It is expected that this trend will continue and indeed will increase in speed with the market for VR and AR reaching a substantial size within a short time scale. In the audio domain, a prominent field explores the reproduction and synthesis of realistic and natural spatial audio. The ideal aim is to produce natural audio sources such that the user cannot recognize the difference between a synthetic or an original one.

A lot of research and development effort has focused on providing efficient and high quality audio encoding and audio decoding for spatial audio. A frequently used spatial audio representation is multichannel audio representations, including stereo representation, and efficient encoding of such multichannel audio based on downmixing multichannel audio signals to downmix channels with fewer channels have been developed. One of the main advances in low bit-rate audio coding has been the use of parametric multichannel coding where a downmix signal is generated together with parametric data that can be used to upmix the downmix signal to recreate the multichannel audio signal.

In particular, instead of traditional mid-side or intensity coding, in parametric multichannel audio coding a multichannel input signal is downmixed to a lower number of channels (e.g. two to one) and multichannel image (stereo) parameters are extracted. Then the downmix signal is encoded using a more traditional audio coder (e.g. a mono audio encoder). The bitstream of the downmix is multiplexed with the encoded multichannel image parameter bitstream. This bitstream is then transmitted to the decoder, where the process is inverted. First the downmix audio signal is decoded, after which the multichannel audio signal is reconstructed guided by the encoded multichannel image/ upmix parameters.

An example of stereo coding is described in E. Schuijers, W. Oomen, B. den Brinker, J. Breebaart, "Advances in Parametric Coding for High-Quality Audio", 114th AES Convention, Amsterdam, The Netherlands, 2003, Preprint 5852. In the described approach, the downmixed mono signal is parametrized by exploiting the natural separation of the signal into three components (objects): transients, sinusoids, and noise. In E. Schuijers, J. Breebaart, H. Purnhagen, J. Engdegård, "Low Complexity Parametric Stereo Coding", 116th AES, Berlin, Germany, 2004, Preprint 6073 more details are provided describing how parametric stereo was realized with a low (decoder) complexity when combining it with Spectral Band Replication (SBR).

An example of spatial audio decoding is known from the publication Jeroen Breebaart ET AL: "Spatial Audio Processing - Ch. 6 MPEG Surround" in: "Spatial Audio Processing", 1 January 2007 (2007-01-01), John Wiley & Sons, Ltd, England, pages 93-115 disclosing an upmixing process using a downmix signal which is decorrelated using a set of decorrelation parameters before being upmixed by applying the upmixing parameters to the downmix and the decorrelated signal. The decorrelation is provided by applying a delay and an all-pass filter.

The patent application US2021/204085A1 discloses techniques for producing transaural spatialized sound using spatial filters implemented by neural networks.

The patent application US2021/191685A1 discloses an audio signal generator using a trained machine learning model to generate a set of decorrelation control parameters.

The publication PARK SU YEON ET AL: "Subband-based upmixing of stereo to 5.1- channel audio signals using deep neural networks", 2016 INTERNATIONAL CONFERENCE ON INFORMATION AND COMMUNICATION TECHNOLOGY CONVERGENCE (ICTC), IEEE, 19 October 2016 (2016-10-19), pages 377-380, DOI: 10.1109/ ICTC.2016.7763500 discloses the upmixing of a stereo signal to rear channels of a 5.1 channel audio decoder, the upmixing is performed by a deep neural network.

In the described approaches, the decoding is based on the use of the so-called de-correlation process. The de-correlation process generates a decorrelated helper signal from the monaural signal. In the stereo reconstruction process, both the monaural signal and the decorrelated helper signal are used to generate the upmixed stereo signal based on the upmix parameters. Specifically, the two signals may be multiplied by a time- and frequency-dependent 2x2 matrix having coefficients determined from the upmix parameters to provide the output stereo signal.

2

However, although Parametric Stereo (PS) and similar downmix encoding/ decoding approaches were a leap forward from traditional stereo and multichannel coding, the approach is not optimal in all scenarios. In particular, known encoding and decoding approaches tend to introduce some distortion, changes, artefacts etc. that may introduce differences between the (original) multichannel audio signal input to the encoder and the multichannel audio signal recreated at the decoder. Typically, the audio quality may be degraded and imperfect recreation of the multichannel occurs. Further, the data rate may still be higher than desired and/or the complexity/ resource usage may of the processing may be higher than preferred.

A further issue is that it is often particularly desirable to reduce the complexity and computational load at the decoder side even if this increases complexity and computational resource at the encoder side. For example, in audio distributions systems, such as systems providing audiovisual content from a central server to many clients, encoding is only performed once whereas decoding may be performed many times in the individual decoding devices, which typically may have less computational resource than a server device.

Further, it is often desired that the encoder side is able to modify or control the generation of audio signals at the decoder side. It is desired that the encoder can be arranged to adapt the operation of the decoder to e.g. provide a desired audio characteristic or to allow the processing to be adapted to result in a more accurate reconstruction of the multichannel audio signal at the decoder side.

Hence, an improved approach would be advantageous. In particular an approach allowing increased flexibility, improved adaptability, an improved performance, increased audio quality, improved audio quality to data rate trade-off, reduced complexity and/or resource usage, improved remote control of audio processing, improved encoder side input on decoder side operation/processing, improved computational resource distribution between encoder side and decoder side processing, reduced computational load, facilitated implementation and/or an improved spatial audio experience would be advantageous.

## SUMMARY OF THE INVENTION

Accordingly, the invention seeks to preferably mitigate, alleviate or eliminate one or more of the above mentioned disadvantages singly or in any combination.

According to an aspect of the invention there is provided an apparatus (claim 1) for generating a multi-channel audio signal, the apparatus comprising: a receiver (101) for receiving a data signal comprising: a downmix audio signal for the multi-channel signal; upmix parametric data for upmixing the downmix audio signal; a set of control data values for adapting a processing to generate an auxiliary signal for upmixing from the down-mix audio signal; an artificial neural network (107) having input nodes for receiving samples of the downmix audio signal and output nodes arranged to provide samples of the auxiliary audio signal, the artificial neural network (107) further comprising nodes arranged to include contributions from the set of control data values; and a generator (105) arranged to generate the multichannel audio signal from the downmix signal and the auxiliary signal in dependence on the upmix parametric data.

The approach may provide an improved audio experience in many embodiments. For many signals and scenarios, the approach may provide improved generation/ reconstruction of a multichannel audio signal with an improved perceived audio quality.

The approach may provide a particularly advantageous arrangement which may in many embodiments and scenarios allow a facilitated and/or improved possibility of utilizing artificial neural networks in audio processing, including typically audio encoding and/or decoding. The approach may allow an advantageous employment of artificial neural network(s) in generating a multichannel audio signal from a downmix audio signal.

The approach may in many embodiments allow an improved multichannel audio signal to be generated by allowing the encoder to adapt/ modify the processing of the apparatus generating the multichannel audio signal. The approach may enable or facilitate such remote control by providing a particular approach that is compatible with and exploits advantages that can be achieved by employing an artificial neural network as part of the audio processing.

The approach may provide an efficient implementation and may in many embodiments allow a reduced complexity and/or resource usage. The approach may in many scenarios allow a reduced data rate for data representing a multichannel audio signal using a downmix signal. The approach may in many embodiments allow reduced complexity and/or resource usage at the decoder/ generating/ reconstruction side at the expense of potentially increased complexity and/or resource usage at the encoder/ source side.

The samples of the downmix audio signal may be time domain samples or may be frequency domain samples (specifically subband samples). The samples of an auxiliary audio signal may be time domain samples or may be frequency domain samples (specifically subband (subband) samples). The samples may span a particular time and frequency range.

The upmix parametric data may comprise parameter (values) relating properties of the downmix signal to properties of the multichannel audio signal. The upmix parametric data may comprise data being indicative of relative properties between channels of the multichannel audio signal. The upmix parametric data may comprise data being indicative of differences in properties between channels of the multichannel audio signal. The upmix parametric data may comprise data being perceptually relevant for the synthesis of the multichannel audio signal. The properties may for example be differences in phase and/or intensity and/or timing and/or correlation. The upmix parametric data may in some embodiments and scenarios represent abstract properties not directly understandable by a human person/expert (but may typically facilitate a better reconstruction/lower data rate etc). The upmix parametric data may comprise data including at least one of interchannel intensity differences, interchannel timing differences, interchannel correlations and/or interchannel phase differences for channels of the multichannel audio signal.

The artificial neural network is a trained artificial neural network.

The artificial neural network may be a trained artificial neural network trained by training data including training downmix audio signals and training upmix parametric data generated from training multichannel audio signals; the training employing a cost function comparing the training multichannel audio signals to upmixed multi-channel signals generated, using the training upmix parametric data, from the training downmix signals and generated auxiliary audio signals. The artificial neural network may be a trained artificial neural network(s) trained by training data including training data representing a range of relevant audio sources including recording of videos, movies, telecommunications, etc.

The artificial neural network may be a trained artificial neural network trained by training data having training input data comprising training downmix audio signals of training multichannel audio signals, and using a cost function including a contribution indicative of a difference between training auxiliary audio signals generated by the second artificial neural network in response to the training data and training residual signals for the training downmix audio signals.

The generator may be arranged to generate the multichannel audio signal by applying a matrix multiplication to the downmix signal and the auxiliary audio signal with the coefficients of the matrix being determined as a function of parameters of the upmix parametric data. The matrix be time- and frequency-dependent.

The audio apparatus may specifically be an audio decoder apparatus.

The control data values may be referred to as metadata, conditioning features, latent representations, conditioning variables, and/or composites.

According to an optional feature of the invention, the apparatus comprises a filter bank (401) arranged to generate a frequency subband representation of the downmix audio signal; and wherein the samples of the downmix audio signal are subband samples of the frequency subband representation.

Subband processing may provide a particularly advantageous operation in many embodiments. The arrangement may be particularly suited for subband processing which may allow reduced complexity and/or and improved multichannel audio signal to be generated.

According to an optional feature of the invention, the artificial neural network (107) is an artificial neural network of a first plurality of subband artificial neural networks, each subband artificial neural network of the first plurality of subband neural networks being arranged to generate subband samples for a subset of subbands of a frequency subband representation of the auxiliary audio signal.

A particular advantage of the approach is that it may allow highly efficient subband processing thereby allowing partitioning of the required processing into a plurality of smaller artificial neural networks. This may typically allow reduced complexity and/or an improved multichannel audio signal to be generated.

In some embodiments, the first plurality of subband artificial neural networks includes an artificial neural network for each subband of the frequency subband representation of the auxiliary audio signal.

In some embodiments, a number of input nodes for neural networks of the first plurality of subband neural networks is monotonically decreasing for increasing frequency.

In some embodiments, the generator is arranged to generate a frequency/ subband representation of the multi-channel signal by performing the upmixing on the frequency/ subband representation of the auxiliary audio signal and on the frequency/ subband representation of the downmix audio signal, and to transform the multi-channel signal frequency/ subband representation of the multi-channel signal to a time domain representation of the multi-channel signal.

In many embodiments, each (or at least some) subband neural network(s) is arranged to generate subband samples for one subband of the frequency subband representation of the auxiliary audio signal.

According to an optional feature of the invention, at least one control data value of the set of control data values is processed by at least two artificial neural networks of the first plurality of subband artificial neural networks.

This may in many embodiments and scenarios provide a highly advantageous and efficient implementation and/or operation and/or performance.

In some embodiments, at least some of the set of control data values is common for a plurality of subbands of the frequency subband representation of the downmix audio signal.

According to an optional feature of the invention, at least one control data value of the of control data values is not processed by at least one artificial neural network of the first plurality of subband artificial neural networks.

This may in many embodiments and scenarios provide a highly advantageous and efficient implementation and/or operation and/or performance.

According to an optional feature of the invention, the artificial neural network (107) is trained by training data including at least one of training multichannel audio signals and training downmix audio signals and training upmix parametric data generated from training multichannel audio signals; the training employing a cost function comparing the training multichannel audio signals to upmixed multi-channel signals generated, using the training upmix parametric data, from the training downmix signals and from generated auxiliary audio signals.

This may provide a particularly efficient implementation and/or improved performance. It may in many embodiments provide a particularly efficient and high performance training.

The set of control data values generated by the subband neural network and being common for a plurality of subbands may be input to a plurality of subband artificial neural networks generating the multichannel audio signal (and specifically the second artificial neural network may be one of a plurality of artificial neural networks having nodes receiving the common set of control data values).

The artificial neural network may be trained by training data including downmix signals and upmix parametric data generated from multi-channel audio signals and control data values; the training employing a cost function comparing the training multi-channel audio signals to upmixed multi-channel signals resulting from upmixing the training down mix signal and the auxiliary signal at output by the artificial neural network using the training upmix parametric data.

According to an optional feature of the invention, the artificial neural network (107) is trained by training data having training input data comprising training downmix audio signals of training multichannel audio signals and training sets of control data values for the training downmix audio signals, and using a cost function including a contribution indicative of a difference between training auxiliary audio signals generated by the artificial neural network in response to the training data and training residual signals for the training downmix audio signals.

This may provide a particularly efficient implementation and/or improved performance. It may in many embodiments provide a particularly efficient and high performance training.

According to an optional feature of the invention, the cost function further includes a contribution indicating a degree of correlation between the auxiliary audio signals and the downmixes of multi-channel signals.

This may provide a particularly efficient implementation and/or improved performance. It may in many embodiments provide a particularly efficient and high performance training.

According to an optional feature of the invention, the apparatus further comprises an upsampler for temporally upsampling the set of control data values and wherein the artificial neural network (107) is arranged to include contributions from upsampled control data values.

This may provide a particularly efficient implementation and/or improved performance.

According to an aspect of the invention, there is provided an apparatus (claim 10) for generating a data signal representing multichannel audio signal, the apparatus comprising: a downmixer arranged to generate a downmix audio signal by downmixing the multichannel audio signal, the downmixer further being arranged to generate upmix parametric data for upmixing of the downmix audio; an artificial neural network arranged to generate a set of control data values for adapting a processing to generate an auxiliary audio signal for upmixing from the downmix audio signal, the artificial neural network having output nodes for providing the set of control data values and input nodes for receiving samples of at least one of the downmix audio signal and the multichannel audio signal; a generator arranged to generate the data signal to comprise the downmix audio signal, the upmix parametric data, and the set of control data values.

The approach may provide an improved audio experience in many embodiments. For many signals and scenarios, the approach may provide improved generation/ reconstruction of a multichannel audio signal with an improved perceived audio quality. The approach may provide a particularly advantageous arrangement which may in many embodiments and scenarios allow a facilitated and/or improved possibility of utilizing artificial neural networks in audio processing, including typically audio encoding and/or decoding. The approach may allow an advantageous employment of artificial neural network(s) in generating a multichannel audio signal from a downmix audio signal.

The approach may provide an efficient implementation and may in many embodiments allow a reduced complexity and/or resource usage. The approach may in many scenarios allow a reduced data rate for data representing a multichannel audio signal using a downmix signal. The approach may in many embodiments allow reduced complexity and/or resource usage at the decoder/ generating/ reconstruction side at the expense of potentially increased complexity and/or resource usage at the encoder/ source side.

The comments provided previously with respect to the apparatus generating the multichannel audio signal may apply mutatis mutandis to the apparatus for generating a data signal.

The samples of the downmix audio signal may be time domain samples or may be frequency domain samples (specifically subband domain samples). The samples of an auxiliary audio signal may be time domain samples or may be frequency domain samples (specifically subband domain samples).

The artificial neural network is a trained artificial neural network.

The artificial neural network may be a trained artificial neural network trained by training data including training downmix audio signals and training upmix parametric data generated from training multichannel audio signals; the training employing a cost function comparing the training multichannel audio signals to upmixed multi-channel signals generated, using the training upmix parametric data, from the training downmix signals and generated auxiliary audio signals.

The artificial neural network may be a trained artificial neural network(s) trained by training data having training input data comprising training downmix audio signals of training multichannel audio signals, and using a cost function including a contribution indicative of a difference between training auxiliary audio signals generated by the second artificial neural network in response to the training data and training residual signals for the training downmix audio signals.

The audio apparatus may specifically be an audio encoder apparatus.

The control data values may be referred to as metadata, conditioning features, latent representations, conditioning variables, and/or composites.

According to an optional feature of the invention, the set of control data values provides a latent representation of at least one of the downmix audio signal and the multi-channel audio signal.

This may provide a particularly efficient implementation and/or improved performance.

According to an optional feature of the invention, the artificial neural network is trained by training data having training input data being samples of training audio signals being at least one of a multichannel audio signal and a downmix of a multichannel audio signal, and using a cost function including a component indicative of a difference between the training audio signals and output audio signals generated from sets of control data values generated by the artificial neutral network for the training audio signals.

This may provide a particularly efficient implementation and/or improved performance. It may in many embodiments provide a particularly efficient and high performance training.

According to an optional feature of the invention, the output audio signals are outputs of a synthesis artificial neural network having input nodes receiving the sets control data values generated by the artificial neutral network for the training audio signals, and the artificial neural network and the synthesis artificial neural network are jointly trained.

This may provide a particularly efficient implementation and/or improved performance. It may in many embodiments provide a particularly efficient and high performance training.

According to an optional feature of the invention, the training audio signals and output audio signals are downmix audio channels.

According to an aspect of the invention, there is provided a method (claim 15) of generating a multi-channel audio signal, the method comprising: receiving a data signal comprising: a downmix audio signal for the multi-channel signal; upmix parametric data for upmixing the downmix audio signal; a set of control data values for adapting a processing to generate an auxiliary signal for upmixing from the down-mix audio signal; operating an artificial neural network (107) having input nodes receiving samples of the downmix audio signal and output nodes providing samples of the auxiliary audio signal, the artificial neural network (107) further comprising nodes arranged to include contributions from the set of control data values; and generating the multichannel audio signal from the downmix signal and the auxiliary signal in dependence on the upmix parametric data.

According to an aspect of the invention, there is provided method (claim 16) of generating a data signal representing multichannel audio signal, the method comprising: generating a downmix audio signal by downmixing the multichannel audio signal, the downmixer further being arranged to generate upmix parametric data for upmixing of the downmix audio; operating an artificial neural network generating a set of control data values for adapting a processing to generate an auxiliary audio signal for upmixing from the downmix audio signal, the artificial neural network having output nodes providing the set of control data values and input nodes receiving samples of at least one of the downmix audio signal and the multichannel audio signal; generating the data signal to comprise the downmix audio signal, the upmix parametric data, and the set of control data values.

According to an aspect of the invention, there is provided a computer program product (claim 17).

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates some elements of an example of an audio apparatus in accordance with some embodiments of the invention;

FIG. 2 illustrates an example of a structure of an artificial neural network;

FIG. 3 illustrates an example of a node of an artificial neural network;

FIG. 4 illustrates some elements of an example of an audio apparatus in accordance with some embodiments of the invention;

FIG. 5 illustrates some elements of an example of an audio apparatus in accordance with some embodiments of the invention;

FIG. 6 illustrates some elements of an example of an audio apparatus in accordance with some embodiments of the invention;

FIG. 7 illustrates some elements of an example of an apparatus for training artificial neural networks of an audio apparatus in accordance with some embodiments of the invention; and

FIG. 8 illustrates some elements of a possible arrangement of a processor for implementing elements of an audio apparatus in accordance with some embodiments of the invention.

DETAILED DESCRIPTION OF SOME EMBODIMENTS OF THE INVENTION

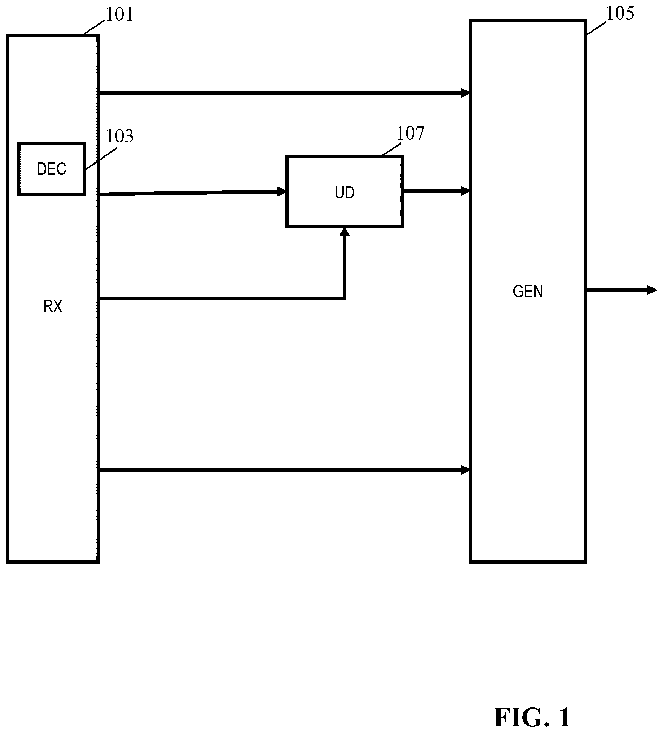

FIG. 1 illustrates some elements of an audio apparatus in accordance with some embodiments of the invention.

The audio apparatus comprises a receiver 101 which is arranged to receive a data signal/ bitstream comprising a downmix audio signal which is a downmix of a multichannel audio signal. The following description will focus on a case where the multichannel audio signal is a stereo signal and the downmix signal is a mono signal, but it will be appreciated that the described approach and principles are equally applicable to the multichannel audio signal having more than two channels and to the downmix signal having more than a single channel (albeit fewer channels than the multichannel audio signal).

In addition, the received data signal includes upmix parametric data for upmixing the downmix audio signal. The upmix parametric data may specifically be a set of parameters that indicate relationships between the signals of different audio channels of the multichannel audio signal (specifically the stereo signal) and/or between the downmix signal and audio channels of the multichannel audio signal. Typically, the upmix parameters may be indicative of time differences, phase differences, level/intensity differences and/or a measure of similarity, such as correlation. Typically, the upmix parameters are provided on a per time and per frequency basis (time frequency tiles). For example, new parameters may periodically be provided for a set of subbands. Parameters may specifically include Inter-channel phase difference (IPD), Overall phase difference (OPD), Inter-channel correlation (ICC), Channel phase difference (CPD) parameters as known from Parametric Stereo encoding (as well as from higher channel encodings).

Typically, the downmix audio signal is encoded and the receiver 101 includes a decoder 103 that decodes the downmix audio signal, i.e. the mono signal in the specific example. It will be appreciated that the decoder 103 may not be needed in case the received downmix audio signal is not encoded and that the decoder 103 may be considered to be an integral part of the receiver 101.

The receiver 101 is coupled to a generator 105 which generates the multichannel audio signal from the downmix signal. The generator 105 is arranged to generate the multichannel audio signal from the downmix audio signal as well as from an auxiliary audio signal in dependence on the parametric upmix data. The generator may specifically for the stereo case generate the output multichannel audio signal by applying a time- and frequency-dependent 2x2 matrix multiplication to the samples of the downmix audio signal and the auxiliary audio signal. The coefficients of the 2x2 matrix are determined from the upmix parameters of the upmix parametric data, typically on a time and frequency band basis. For other upmix operations, such as from a mono or stereo downmix signal to a five channel multichannel audio signal, the generator 105 may apply matrix multiplications with matrices of suitable dimensions.

It will be appreciated that many different approaches of generating such a multichannel audio signal from a downmix audio signal and an auxiliary audio signal, and for determining suitable matrix coefficients from upmix parametric data, will be known to skilled person and that any suitable approach may be used. Specifically, various approaches for Parametric Stereo upmixing that are based on downmix and auxiliary audio signals are well known to the skilled person.

In conventional systems, the upmixing includes generating an auxiliary audio signal in the form of a decorrelated signal of the mono audio signal. It has been found that by generating a decorrelated signal and mixing this with the mono audio signal, an improved quality of the upmix signal is perceived and therefore decoders have been developed to exploit this. The decorrelated signal is typically generated by a decorrelator in the form of an all-phase filter that is applied to the mono audio signal. However, whereas the use of such an all pass filter tends to result in a multichannel audio signal being generated that is perceived to be of improved quality, it is still not ideal, and some audio quality degradation may often be perceived.

The audio apparatus of FIG. 1 uses an approach which has been found to tend to provide an improved perceived audio quality in many scenarios and for many different audio signals.

In the approach, a decorrelated signal is not generated by a straightforward filtering of the downmix/ mono audio signal, but rather an auxiliary audio signal is generated by a trained artificial neural network with the auxiliary audio signal being used by the generator 105 to generate the multichannel audio signal based on the upmix parameters.

The apparatus further comprises an artificial neural network which will also be referred to as the synthesis artificial neural network 107. The synthesis artificial neural network 107 is coupled to the decoder 103/ receiver 105. The synthesis artificial neural network 107 specifically comprises input nodes for receiving samples of the downmix audio signal. The synthesis artificial neural network 107 has output nodes that provide samples of the auxiliary audio signal and these may then be fed to the generator 105 where the upmix operation is completed.

In the approach, the upmix process is thus not based on applying a decorrelation filter to the downmix audio signal in order to generate a decorrelated signal that is subsequently combined with the downmix audio signal to generate the multichannel audio signal. Rather, a trained artificial neural network generates an auxiliary audio signal that may specifically replace the decorrelated signal used in conventional upmix decoders.

As will be described in detail later, different approaches may be used to train the artificial neural network(s) and in particular an overall training may seek to result in the output of the audio apparatus being a multichannel audio signal that most closely correspond to the original multichannel audio signal. Thus, the synthesis artificial neural network 107 may be trained to provide an auxiliary audio signal that most effectively results in accurate reconstruction of the multichannel audio signal. **In** contrast to conventional approaches, such a signal is not necessarily a decorrelated signal but rather the synthesis artificial neural network 107 will be trained to result in an auxiliary audio signal that is most suitable for the combination with the downmix audio signal to generate the multichannel audio signal. Such a signal will typically not be a decorrelated signal of the downmix audio signal but may for example be a partially correlated signal, and indeed in many cases may be likely to be closer to the actual residual signal that results from the original downmixing of the multichannel audio signal. Thus, the user of a trained artificial neural network may allow the decoder to inherently and automatically take into account and compensate for effects that may be introduced at the encoder side.

In the approach, the artificial neural network arrangement is accordingly arranged to generate a second auxiliary "helper" signal that aids and improves the multichannel reconstruction. E.g. for a stereo signal, the encoder may generate a downmix signal as c*(l+r), where l,r represent the left channel signal and the right channel signal respectively and c is a time- and frequency-dependent scaling factor. The corresponding second signal for ideal reconstruction can be shown to be d*(l-r), where d is again time- and frequency-dependent. Those two signals are not necessarily fully decorrelated and a substantial advantage of the described approach is that in contrast to merely seeking to try decorrelate the mono-downmix, the artificial neural network arrangement will generate an auxiliary audio signal that will tend to approach the ideal signal d* (l-r). This may typically provide substantially improved reconstruction of the original multichannel audio signal.

The generation of the auxiliary audio signal is further improved by the synthesis artificial neural network 107 that generates the signal is adapted based on the set of control data values received with the downmix audio signal. In the approach, the synthesis artificial neural network 107 further comprises nodes that receive contributions from the control values of the set of control data values that are received by the receiver 101, and which typically is provided to the synthesis apparatus from the source apparatus. Such nodes may be input nodes of the input layer that also comprises the nodes receiving the samples of the downmix audio signal or one, more, or all of the nodes receiving the control data values may be nodes of a different layer than the input layer of the downmix audio signal. For example, some or all of the nodes receiving contributions from control data values may be part of a hidden or processing layer of the synthesis artificial neural network 107.

In the approach, a specific arrangement is accordingly used in order to enable that the processing and operation of the synthesis apparatus can be modified/ adapted remotely, and specifically an approach is used which allows an encoder side control of decoder side reconstruction of a multichannel audio signal. The approach specifically provides a way for an encoder side control of the generation of the auxiliary audio signal and for adapting the operating of a trained local artificial neural network that performs an integral part of the synthesis of the multichannel audio signal. The approach may for example allow an encoder apparatus to generate signal specific/ dependent control data that can adapt the operation of the decoder to generate an improved auxiliary audio signal. Further, the approach specifically allows the remote control of a function that may not be known or predictable at the encoder/ source side, or indeed even at the decoder/ synthesis side. The approach may specifically provide for an encoder/ remote control of an artificial neural network such that this can be adapted to provide a more desired or improved operation. Further, the approach may in some embodiments allow that the complexity of the synthesis apparatus is reduced as e.g. signal specific control data can be generated at the source side rather than requiring the synthesis apparatus to process the signal to generate data that can adapt the second artificial neural network 109.

The approach in many embodiments allows for an improved reconstruction of the multichannel audio signal and may provide a highly efficient implementation which may be achieved with relatively low complexity and resource usage.

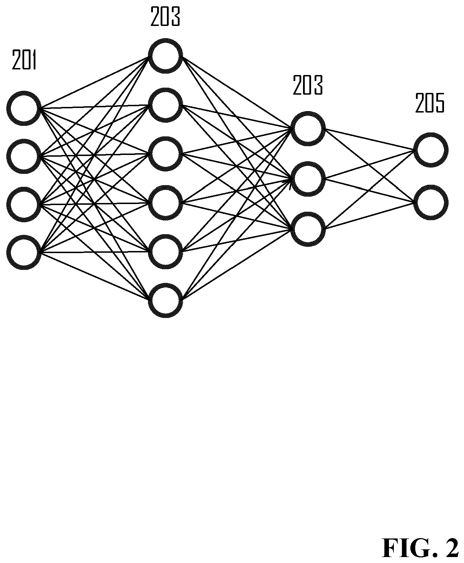

An artificial neural network as used in the described functions may be a network of nodes arranged in layers and with each node holding a node value. FIG. 2 illustrates an example of a section of an artificial neural network.

The node value for a given node may be calculated to include contributions from some or often all nodes of a previous layer of the artificial neural network. Specifically, the node value for a node may be calculated as a weighted summation of the node values of all the nodes output of the previous layer. Typically, a bias may be added and the result may be subjected to an activation function. The activation function provides an essential part of each neuron by typically providing a non-linearity. Such non-linearities and activation functions provides a significant effect in the learning and adaptation process of the neural network. Thus, the node value is generated as a function of the node values of the previous layer.

The artificial neural network may specifically comprise an input layer 201 comprising a plurality of nodes receiving the input data values for the artificial neural network. Thus, the node values for nodes of the input layer may typically directly be the input data values to the artificial neural network and thus may not be calculated from other node values.

The artificial neural network may further comprise none, one, or more hidden layers 203 or processing layers. For each of such layers, the node values are typically generated as a function of the node values of the nodes of the previous layer, and specifically a weighted combination and added bias followed by an activation function (such as a sigmoid, ReLU, or Tanh function may be applied).

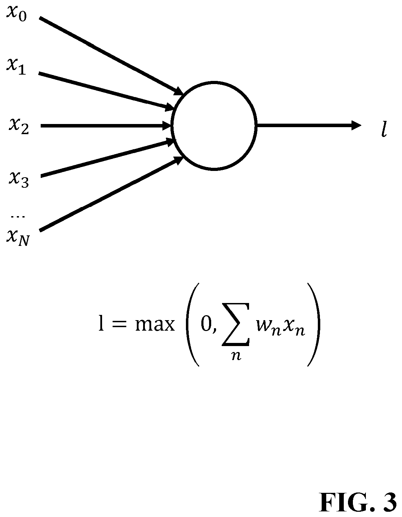

Specifically, as shown in FIG. 3, each node, which may also be referred to as a neuron, may receive input values (from nodes of a previous layer) and therefrom calculate a node value as a function of these values. Often, this includes first generating a value as a linear combination of the input values with each of these weighted by a weight:

$$k = \sum_n w_n x_n$$

where w refers to weights, x refers to the nodes of the previous layer and n is an index referring to the different nodes of the previous layer.

An activation function may then by applied to the resulting combination. For example, the node value l may be determined as:

$$l = f(k)$$

where the function may for example be a Rectified Linear Unit function as described in Xavier Glorot, Antoine Bordes, Yoshua Bengio Proceedings of the Fourteenth International Conference on Artificial Intelligence and Statistics, PMLR 15:315-323, 2011):

$$f(k) = ReLU(k) = \max(0, k)$$

Other often used functions include a sigmoid function or a tanh function. In many embodiments, the node output or value may be calculated using a plurality of functions. For example, both a ReLU and Sigmoid function may be combined using an activation function such as:

$$f(k) = ReLU(k) + \sigma(k)$$

Such operations may be performed by each node of the artificial neural network (except for typically the input nodes).

The artificial neural network further comprises an output layer 205 which provides the output from the artificial neural network, i.e. the output data of the artificial neural network is the node values of the output layer. As for the hidden/ processing layers, the output node values are generated by a function of the node values of the previous layer. However, in contrast to the hidden/ processing layers where the node values are typically not accessible or used further, the node values of the output layer are accessible and provide the result of the operation of the artificial neural network.

A number of different networks structures and toolboxes for artificial neural network have been developed and in many embodiments the artificial neural network may be based on adapting and customizing such a network. An example of a network architecture that may be suitable for the applications mentioned above is WaveNet by van den Oord et al which is described in Oord, Aaron van den, Sander Dieleman, Heiga Zen, Karen Simonyan, Oriol Vinyals, Alex Graves, Nal Kalchbrenner, Andrew Senior, and Koray Kavukcuoglu. "Wavenet: A generative model for raw audio." arXiv preprint arXiv:1609.03499 (2016).

WaveNet is an architecture used for the synthesis of time domain signals using dilated causal convolution, and has been successfully applied to audio signals. For WaveNet the following activation function is commonly used:

$$\mathbf{z} = \tanh\left(W_{f,k} * \mathbf{x}\right) \odot \sigma\left(W_{g,k} * \mathbf{x}\right),$$

where * denotes a convolution operator, $\odot$ denotes an element-wise multiplication operator, $\sigma(\cdot)$ is a sigmoid function, k is the layer index, f and g denote filter and gate, respectively, and W represents the weights of the learned artificial neural network. The filter product of the equation may typically provide a filtering effect with the gating product providing a weighting of the result which may in many cases effectively allow the contribution of the node to be reduced to substantially zero (i.e. it may allow or "cutoff" the node providing a contribution to other nodes thereby providing a "gate" function). **In** different circumstances, the gate function may result in the output of that node being negligible, whereas in other cases it would contribute substantially to the output. Such a function may substantially assist in allowing the neural network to effectively learn and be trained.

An artificial neural network may in some cases further be arranged to include additional contributions that allow the artificial neural network to be dynamically adapted or customized for a specific desired property or characteristics of the generated output. For example, a set of values may be provided to adapt the artificial neural network. For example, a set of values may be provided to adapt the artificial neural network. These values may be included by providing a contribution to some nodes of the artificial neural network. These nodes may be specifically input nodes but may typically be nodes of a hidden or processing layer. Such adaptation values may for example be weighted and added as a contribution to the weighted summation/ correlation value for a given node. For example, for WaveNet such adaptation values may be included in the activation function. For example, the output of the activation function may be given as:

$$\mathbf{z} = \tanh\left(W_{f,k} * \mathbf{x} + V_{f,k} * \mathbf{y}\right) \odot \sigma\left(W_{g,k} * \mathbf{x} + V_{g,k} * \mathbf{y}\right)$$

where y is a vector representing the adaptation values and V represents suitable weights for these values.

The above description relates to a neural network approach that may be suitable for many embodiments and implementations. However, it will be appreciated that many other types and structures of neural network may be used. Indeed, many different approaches for generating a neural network have been, and are being, developed including neural networks using complex structures and processes that differ from the ones described above. The approach is not limited to any specific neural network approach and any suitable approach may be used without detracting from the invention.

In many embodiments, the set of control data values are generated by an audio apparatus that will also be referred to as an encoder or source audio apparatus. The source audio apparatus may provide a data signal, and specifically a bitstream, comprising the downmix audio signal, the upmix parametric data, and the set of control data values. The source audio apparatus may specifically be an encoder apparatus that receives a multichannel audio signal which it encodes by generating a downmix audio signal with associated upmix parametric data. Specifically, the source audio apparatus may be a Parametric Stereo (PS) encoder that receives a stereo signal and encodes it as a mono audio signal with associated upmix parametric data.

In addition, the source audio apparatus is arranged to include a set of control data values in the bitstream in order to allow the synthesis audio apparatus to adapt its upmix processing. Specifically, the source audio apparatus may generate and transmit a set of control data values that allows it to adapt the upmix processing of the synthesis audio apparatus, and specifically it can adapt the operation of the artificial neural network generating the auxiliary audio signal at the synthesis audio apparatus.

Different approaches may be used by the source audio apparatus to generate the set of control data values. Indeed, in some embodiments, the source audio apparatus may store a predetermined set of control data values that may adapt the upmix operation, and specifically the artificial neural network operation, of the synthesis audio apparatus. This may for example allow different source audio apparatuses to adapt the operation of the synthesis audio apparatus to its individual preferences. As another example, the approach may allow an adaptation of an audio system without requiring all the end user devices to be updated. For example, if improved training or adaptation to different types of signals is to be introduced to a system, this may be achieved by modifying the set of control data values that are stored in the source audio apparatus. This may allow the synthesis artificial neural networks to be updated to perform an improved operation without requiring a retraining or modification of the synthesis artificial neural networks themselves.

In many embodiments, the source audio apparatus may be arranged to determine the set of control data values in dependence on the multichannel audio signal or the generated downmix audio signal.

In some embodiments, one or more of the control data values may be generated by an analysis of the downmix audio signal.

It will be appreciated that many different algorithms and procedures are known for analyzing an audio signal to extract or determine properties of the audio signal and that any suitable (analytical) approach, algorithm, and property may be used.

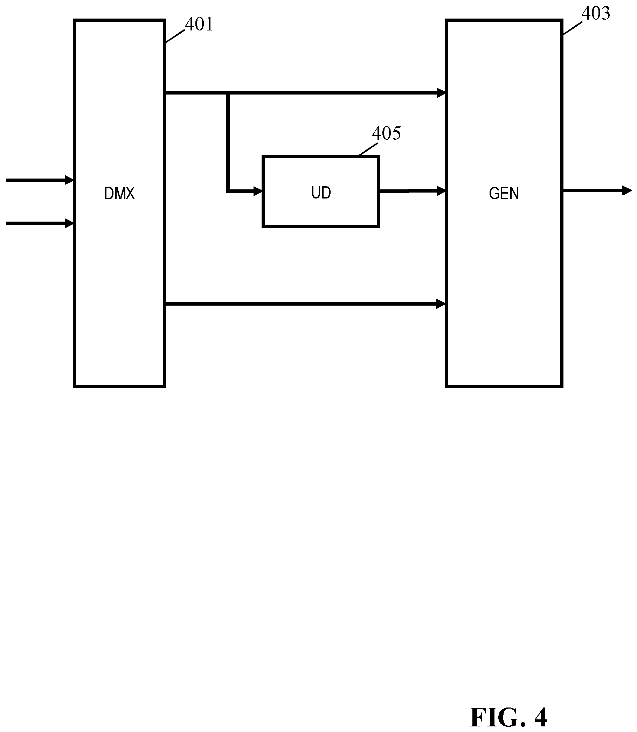

In many embodiments, the source audio apparatus may include functionality for generating the set of control data values based on an artificial neural network generating the set of control data values from the downmix audio signal. An example of such an encoder is illustrated in FIG. 4.

The source audio apparatus of FIG. 4 comprises a downmixer 401 which receives a multichannel audio signal which in the present case is a stereo signal. The downmixer 401 generates a downmix audio signal, which in the specific example is a mono signal. In addition, it generates upmix parameters, such as IPD, OPD, ICC, CPD parameters. It may further encode the downmix audio signal in a suitable format. It will be appreciated that many different algorithms and approaches for generating a downmix audio signal with associated upmix parameters are known, and that any suitable approach may be used (e.g. in the present case a PS encoding may be applied).

The (encoded) downmix audio signal and the upmix parameters are fed to a data signal generator 403 which is arranged to generate an output data signal/ bitstream that includes the (encoded) downmix audio signal and upmix parametric data comprising the upmix parameters.

The source audio apparatus further comprises an artificial neural network which henceforth will be referred to as the source artificial neural network 405. The source artificial neural network 405 receives samples of the downmix audio signal and/or the multichannel audio signal and in response it generates a set of control data values. Such sets of control data values are fed to the data signal generator 403 where they are included in the generated bitstream.

Thus, the source audio apparatus specifically comprises a source artificial neural network 405 which is arranged to receive samples of the downmix audio signal and/or the multichannel audio signal with these being fed to input nodes of the source artificial neural network 405. The output nodes of the source artificial neural network 405 provide a set of control data values for the downmix audio signal/ multichannel audio signal. The set of control data values may comprise a number of values (such as specifically scalar values) that are reflective of properties or characteristics of the downmix audio signal/ multichannel audio signal.

Typically, the source artificial neural network 405 may comprise a much larger number of input nodes than output nodes, and consequently a relatively low number of control data values are generated from a relatively large number of samples. Accordingly, the control data values may provide a highly compressed and reduced representation of some properties or characteristics of the downmix audio signal/ multichannel audio signal. For example, the source artificial neural network 405 may have 1028 input nodes and 16 output nodes thereby providing a highly compressed set of values that are dependent on properties of the downmix audio signal. A latent representation of the downmix audio signal and/or multichannel audio signal may be generated.

In the arrangement, the output of the source artificial neural network 405 is (via the data signal distribution/ communication) introduced to the synthesis artificial neural network 107 and is thus used to control and adapt the processing of the synthesis artificial neural network 107. Thus, even with constant weights and coefficients, the synthesis artificial neural network 107 is not merely a fixed filter or trained network but rather can be seen as being an adaptive or variable operation that is adapted based on the results of the source artificial neural network 405.

Similarly, the source artificial neural network 405 and the generated control data values are not specifically control data values that represent specific selected properties or characteristics of the signal. Rather, the source artificial neural network 405 may be trained such that it automatically adapts to provide control data values that are particularly suitable for adapting the synthesis artificial neural network 107 to provide improved output values for accurate reproduction of the multichannel audio signal.

Such an approach may provide a particularly efficient approach that typically may result in an improved reconstruction of the multichannel audio signal at the synthesis side. The approach may thus generate a latent representation of the downmix audio signal and/or the multichannel audio signal.

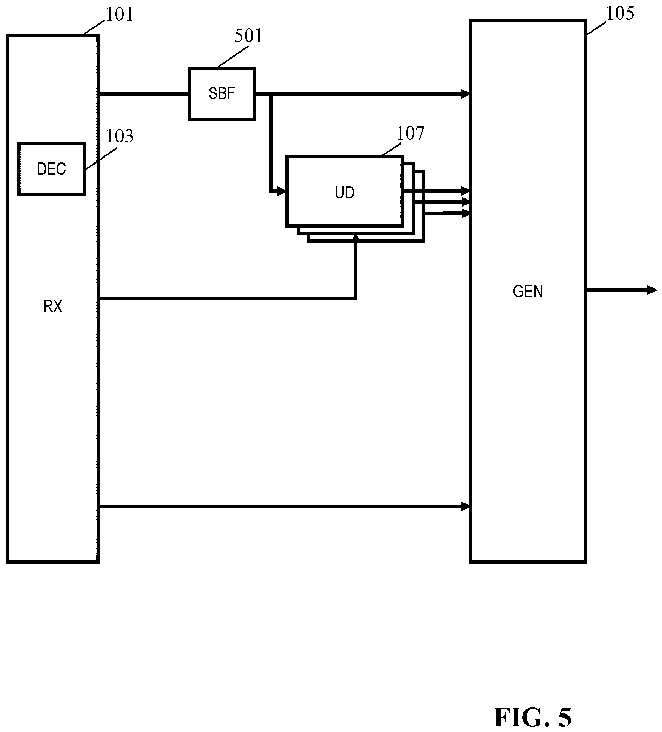

In many embodiments, the synthesis audio apparatus is arranged to perform subband processing. Specifically, as shown in FIG. 5, the apparatus of FIG. 1 may be modified to include a filter bank which is arranged to generate a frequency subband representation of the downmix audio signal. The filter bank may be Quadrature Mirror Filter (QMF) bank or may e.g. be implemented by a Fast Fourier Transform (FFT), but it will be appreciated that many other filter banks and approaches for dividing an audio signal into a plurality of subband signals are known and may be used. The filter-bank may specifically be a complex-valued pseudo QMF bank, resulting in e.g. 32 or 64 complex-valued sub-band signals.

In many embodiments, the filterbank 501 is arranged to generate a set of subband signals for subbands having equal bandwidth. In other embodiments, the filterbank 401 may be arranged to generate subband signals with subbands having different bandwidths. For example, a higher frequency subbands may have a higher bandwidth than a lower frequency subband. Also, subbands may be grouped together to form a higher bandwidth sub-band.

Typically, the subbands may have a bandwidth in the range from 10Hz to 10000Hz.

In some such embodiments, an artificial neural network generating samples for the auxiliary audio signal is arranged to receive subband samples, i.e. samples of a subband audio signal. In particular, the apparatus of FIG. 5 comprises a plurality of subband neural networks 109 that are each arranged to receive subband samples for a subband generated by the filterbank from the downmix signal. Each of these subband artificial neural networks further receives the set of control data values and it proceeds to generate subband samples of the multichannel audio signal for that subband.

The subband samples from the subband artificial neural networks are fed to the generator 105 which proceeds to generate the reconstructed multichannel audio signal/ For example, in some embodiments where a subband representation of the multichannel audio signal is desired (e.g. due to a subsequent processing also being subband based), the generator 105 may simply output the subband samples from the subband artificial neural networks, possibly in accordance with a specific structure or format. In many embodiments, the generator 105 comprises functionality for converting the subband representation of the reconstructed multichannel audio signal to a time domain representation. The generator 105 may specifically comprise a synthesis filterbank performing the inverse operation of the filterbank 501 thereby converting the subband representation to a time domain representation of the multichannel audio signal.

The generator may specifically be arranged to generate a frequency/ subband-domain representation of the multichannel audio signal by processing the frequency or subband-domain representation of the downmix audio signal and the frequency/ subband-domain representation of the auxiliary audio signal. The processing of the generator 105 may thus be a subband processing, such as for example a matrix multiplication performed in each subband on the subband samples of the downmix audio signal and the auxiliary audio signal generated by the corresponding subband artificial neural network.

The resulting subband/ frequency domain representation may then be used directly or may e.g. be converted to a time domain representation using a suitable synthesis filter bank, which in particular may be applied by separate synthesis filters for each channel.

Each of the plurality of subband neural networks may also be referred to as a synthesis subband artificial neural network. The comments previously provided with respect to the artificial neural network 107 will mutatis mutandis also apply to the synthesis subband artificial neural networks, indeed the synthesis artificial neural network 107 may be considered to be one of the synthesis subband artificial neural networks.

Thus, in the arrangement, each of the synthesis subband artificial neural networks receives subband samples for the subband of the synthesis subband artificial neural networks and further all of the synthesis subband artificial neural networks are arranged to receive the set of control data values from the source artificial neural network 405.

Each of the synthesis subband artificial neural networks generates subband samples for a subset of subbands of a frequency subband representation of the auxiliary audio signal, and typically generates (only) subband samples for the subband for which it receives input samples from the filterbank 501.

In many embodiments, the apparatus includes an artificial neural network for each subband of the frequency subband representation of the auxiliary audio signal generated by the filter bank. Thus, in many embodiments, the output samples for each subband of the filterbank 501 is fed to input nodes of one synthesis subband artificial neural network with that synthesis subband artificial neural network then generating subband samples of the auxiliary audio signal for that subband. **In** many embodiments, the subband processing may thus be completely separated for each subband.

In the example, the generation of the auxiliary audio signal is thus performed on a subband by subband basis with separate and individual artificial neural networks in each subband. The individual artificial neural networks are trained to provide output samples for the subband for which they are provided input subband samples. However, the subband artificial neural networks are further adapted based on the control data values received by the receiver 101.

Such an approach has been found to provide a very advantageous generation of an auxiliary audio signal that allows a very high quality reconstruction of the multichannel audio signal. Further, it may allow a highly efficient operation with substantially reduced complexity and/or typically substantially reduced computational resource requirements. The subband artificial neural networks tend to be substantially smaller than a single full artificial neural network required for generation of the entire signal. Typically, a lot fewer nodes, and possibly even fewer layers, are required for the processing resulting in a very big reduction in the number of operations and calculations required to implement the artificial neural network functionality. Although more artificial neural networks are needed to cover all the subbands, the smaller artificial neural networks will typically result in a huge reduction in the overall number of operations required, and thus in the overall computational resource requirement. Further, in many scenarios it may allow a more efficient learning process.

The subband arrangement may accordingly provide a computationally efficient approach for allowing artificial neural networks to be implemented to assist in the decoding of audio data comprising a downmix audio signal and upmix parametric data. The described system and approach allow a high quality multichannel audio signal to be reconstructed and typically significantly improved audio quality can be achieved compared to a conventional approach. Further, a computationally efficient decoding process can be achieved. The subband and artificial neural network based approach may further be compatible with other processing using subband processing.

In some embodiments, the subband processing may be more flexible than a strict subband by subband processing. For example, in some embodiments, each synthesis subband artificial neural network may receive subband samples from not only the subband itself but possibly also for one or more other subbands. For example, the synthesis subband artificial neural network for one subband may in some embodiments also receive samples of the downmix audio signal from one or two neighbor/ adjacent subbands. As another example, in some embodiments, one or more of the synthesis subband artificial neural networks may also receive input samples from one or more subbands comprising harmonics (or subharmonics) for frequencies of the subband. For example, a subband around a 500Hz center frequency may also receive frequencies from a subband around a 1000Hz center frequency. Such additional subbands having a specific relationship to the subband of the synthesis subband artificial neural network may provide additional information that may allow an improved synthesis subband artificial neural network to be generated for some audio signals.

In some embodiments, all the synthesis subband artificial neural networks may have the same properties and dimensions. In particular, in many embodiments, all the synthesis subband artificial neural networks may have the same number of input nodes and output nodes, as well as possibly the same internal structure. Such an approach may for example be used in embodiments where all subbands have the same bandwidth.

In some embodiments, the synthesis subband artificial neural networks may however include non-identical neural networks. In particular, in some embodiments, the number of input nodes for the synthesis subband artificial neural networks may be different for at least two of the artificial neural networks. Thus, in some embodiments, the number of input samples being included in the determination of the output samples may be different for different subbands and synthesis subband artificial neural networks.

In some embodiments, the number of samples/ input nodes may be higher for some lower frequency subbands than for some higher frequency bands. Indeed, the number of samples/ input nodes may be monotonically decreasing for increasing frequency. The lower frequency synthesis subband artificial neural networks may thus be larger and consider more input samples than higher frequency synthesis subband artificial neural networks. Such an approach may for example be combined with subbands having different bandwidths, such as when lower frequency subbands may have a higher bandwidth than higher frequency bandwidths.

Such an approach may in many scenarios provide an improved trade-off between the audio quality that can be achieved and the computational complexity and resource usage. It may provide a closer adaptation of the system to reflect typical characteristics of audio thereby allowing a more efficient processing.

In the approach described above, a single source artificial neural network 405 is used to generate control data values for the set of control data values whereas multiple synthesis subband artificial neural networks process subband downmix audio signals.

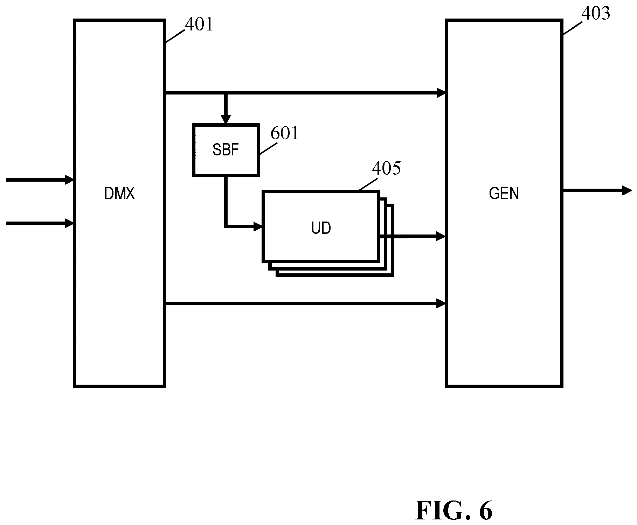

In other embodiments, the generation of the sets of control data values in the source audio apparatus may be subband based. Similarly, to the synthesis audio apparatus, the source audio apparatus may, as illustrated in FIG. 6, also include a filterbank 601 that is applied to the downmix audio signal to provide a set of subband signals that are then fed to corresponding subband artificial neural networks that each generate a set of control data values. Such multiple artificial neural networks will also be referred to as source subband artificial neural networks. The sets of control data values generated by the source subband artificial neural networks may then be fed to the synthesis subband artificial neural networks. The subbands generated by such a filterbank 601 need not be the same as those generated by the filterbank 501 generating subband samples for the synthesis subband artificial neural networks. For example, each of the subbands for determining a set of control data values may include a different number of subbands for the synthesis subband artificial neural networks and the set of control data values sets determined by one source subband artificial neural network may be fed to the appropriate synthesis subband artificial neural network.

However, in many embodiments, the subbands used for the control data value generation by the source audio apparatus may be the same as the subband used for the synthesis subband artificial neural networks of the power receiver.

The comments previously provided with respect to the source artificial neural network 405 will mutatis mutandis also apply to the source subband artificial neural networks, indeed the source artificial neural network 405 may be considered to be one of the source subband artificial neural networks.

In the approach, each of the source subband artificial neural networks generate a set of control data values that in some embodiments is applied only to a subset of the synthesis subband artificial neural networks. Indeed, in many embodiments, each of the source subband artificial neural networks may generate a set of control data values for one of the synthesis subband artificial neural networks. In some embodiments, the apparatus may include the same number of source subband artificial neural networks and synthesis subband artificial neural networks, and specifically for each subband of the filterbank 501 there may be one source subband artificial neural network and one synthesis subband artificial neural network. In other embodiments, there may be a different number of source subband artificial neural networks and synthesis subband artificial neural networks. For example, one source subband artificial neural network may receive input samples for a group of subbands and generate a set of control data values for this group of subbands. This set of control data values may then be applied to the group of the synthesis subband artificial neural networks for these subbands.

Such a subband based approach for generating sets of control data values may in many scenarios provide improved results by allowing a more accurate set of control data values to be generated and used to adapt the synthesis subband artificial neural networks. It may also in many scenarios reduce complexity and/or resource usage. For example, fewer values in the sets of control data values may be achieved in many embodiments thereby allowing reduction of complexity of both the source subband artificial neural networks and the synthesis subband artificial neural networks. Further, typically, the source subband artificial neural networks will have less inputs and be much smaller than an artificial neural network covering the entire bandwidth.

In many such embodiments, each of the source subband artificial neural networks may generate a set of control data values for a given subset of subbands, and typically for a single subband, based on subband samples of that subset of subbands. However, in addition, one or more of the source subband artificial neural networks may in addition include subbands that are from one or more other subbands, i.e. the input to the source subband artificial neural network may have an input node that receives a subband sample for a subband for which the source subband artificial neural network does not generate any set of control data values.

As a specific example, in many embodiments, each source subband artificial neural network may as input receive subsamples from not only the subband for which it generates a set of control data values but also from say the neighboring subbands.

Such approaches may often allow an improved set of control data values to be generated which may lead to improved audio quality. In particular, it has been found that considering surrounding subbands may allow the set of control data values to better reflect temporal resolution of the downmix audio signal/ multichannel audio signal. It has been found that such an approach may in particular allow a better representation of temporal peakedness.

In some embodiments, one or more of the source subband artificial neural networks, or indeed the source artificial neural network 405 in cases of only one such artificial neural network being included, may further as an input include subband samples from outside the time interval for which the corresponding synthesis subband artificial neural network generates samples of the auxiliary audio signal.

In particular, the processing of the audio apparatus operates on a frame by frame basis where a time interval/ frame of the received downmix audio signal is processed to generate output samples for the multichannel audio signal for that time interval/ frame. Thus, for each frame, the filterbank 501 generates subband samples, these are fed to the source subband artificial neural networks which generate sets of control data values for the time interval, and to the source subband artificial neural networks which based on the subbands and the set of control data values generate subband samples of the subband representation of the multichannel audio signal.

Thus, in particular, each source subband artificial neural network operates in block form with each operation where a set of output samples are generated from a set of input samples correspond to a time interval of the downmix audio signal/ multichannel audio signal for which output samples of the multichannel audio signal are generated.

In some embodiments, one or more of the source subband artificial neural networks may in addition to the appropriate subband samples that are generated for the current time interval also receive subband samples for another time interval, such as typically from one or more neighbor time intervals. For example, in some embodiments, one or more of the source subband artificial neural networks may also include the subband samples for the previous and next time interval.

In many embodiments, such an approach may provide improved sets of control data values to be generated leading to improved audio quality.

In some embodiments, at least some of the set of control data values is common for a plurality of subbands of the frequency subband representation of the downmix audio signal.

In the approach described above, the synthesis subband artificial neural networks are all provided with the same set of control data values. In some embodiments, only some of the synthesis subband artificial neural networks may be provided with the same set of control data values. Specifically, in some embodiments at least one control data value of the of control data values is processed by at least two synthesis subband artificial neural networks.

Using the same set of control data values may in many embodiments provide improved efficiency and performance. It may often reduce complexity and resource usage in generating the set of control data values. Further, in many scenarios it may provide improved operation and that all the available information provided by the control data values may be considered by each synthesis subband artificial neural network , and thus improved adaptation of the synthesis subband artificial neural network may be achieved.

However, in some embodiments, different synthesis subband artificial neural networks may be provided with different sets of control data values. In particular, in some embodiments, one or more control data values will be processed by one of the synthesis subband artificial neural networks but not by another one of the synthesis subband artificial neural networks.

For example, the source artificial neural network 405 may generate a set of control data values and different subsets of these may be provided to different synthesis subband artificial neural networks. In other embodiments, some control data sets may also be generated to include some control data values that are e.g. provided manually or generated by an analysis of the downmix audio signal. For example, harmonics or peaks may be detected in the downmix audio signal. Such data may e.g. only be applied to some of the synthesis subband artificial neural networks. For example, detected peaks or harmonics may only be indicated to the synthesis subband artificial neural networks of the subbands in which they are detected.

In many embodiments, different synthesis subband artificial neural networks may thus be provided with different sets of control data values. In many cases, this may include some control data values being the same and some control data values being different for different sets of synthesis subband artificial neural networks.

The above description has focused on the application of subband processing to the downmix audio signal and the source subband artificial neural networks 107 generating the set of control data values based on the downmix audio signal. However, it will be appreciated that the described approach and principles can equally be applied to the multichannel audio signal and indeed that with minor modifications the references to the downmix audio signal can be considered to equally be references to the multichannel audio signal. Thus, in particular, subband processing may be applied to the multichannel audio signal by applying a filterbank to the channels of the multichannel audio signal.

Artificial neural networks are adapted to specific purposes by a training process which are used to adapt/ tune/ modify the weights and other parameters (e.g. bias) of the artificial neural network. It will be appreciated that many different training processes and algorithms are known for training artificial neural networks. Typically, training is based on large training sets where a large number of examples of input data are provided to the network. Further, the output of the artificial neural network is typically (directly or indirectly) compared to an expected or ideal result. A cost function may be generated to reflect the desired outcome of the training process. In a typical scenario known as supervised learning, the cost function often represents the distance between the prediction and the ground truth for a particular input data. Based on the cost function, the weights may be changed and by reiterating the process for the modified weights, the artificial neural network may be adapted towards a state for which the cost function is minimized.

In more detail, during a training step the neural network may have two different flows of information from input to output (forward pass) and from output to input (backward pass). In the forward pass, the data is processed by the neural network as described above while in the backward pass the weights are updated to minimize the cost function. Typically, such a backward propagation follows the gradient direction of the cost function landscape. In other words, by comparing the predicted output with the ground truth for a batch of data input, one can estimate the direction in which the cost function is minimized and propagate backward, by updating the weights accordingly. Other approaches known for training artificial neural networks include for example Levenberg-Marquardt algorithm, the conjugate gradient method, and the Newton method etc.

In the present case, training may specifically include a training set comprising a potentially large number of multichannel audio signals. In some embodiments, training data may be multichannel audio signals in time segments corresponding to the processing time intervals of the artificial neural networks being trained, e.g. the number of samples in a training multichannel audio signal may correspond to a number of samples corresponding to the input nodes of the artificial neural network(s) being trained. Each training example may thus correspond to one operation of the artificial neural network(s) being trained. Usually, however, a batch of training samples is considered for each step to speed up the training process. Furthermore, many upgrades to gradient descent are possible also to speed up convergence or avoid local minima in the cost function landscape.

For each training multichannel audio signal, a training processor may perform a downmix operation to generate a downmix audio signal and corresponding upmix parametric data. Thus, the encoding process that is applied to the multichannel audio signal during normal operation may also be applied to the training multichannel audio signal thereby generating a downmix and the upmix parametric data.

In addition, the training processor may in some embodiments generate a residual signal which reflects the difference between the downmix audio signal and the multichannel audio signal, or more typically represents the part of the multichannel audio signal not properly represented by the downmix audio signal. For example, in many embodiments the training processor may generate a downmix signal and in addition may generate a residual signal which when used in an upmixing based on the upmix parametric data will result in a (more) accurate multichannel audio signal to be reconstructed.

Specifically, for a stereo multichannel audio signal, the training processor may use a Parametric Stereo scheme (e.g. in accordance with a suitable standardized approach). Such an encoding will apply a frequency- and time-dependent matrix operation, e.g. a rotation operation to the input stereo signal to generate a downmix signal and a residual signal. For example, typically a 2x2 matrix multiplication/ complex value multiplication is applied to the input stereo signals to e.g. substantially align one of the rotated channel signals to have a maximum signal value. This channel may be used as the mono-signal and the rotation is typically performed on a frame basis. The rotation value may be stored as part of the upmix parametric data (or a parameter allowing this to be determined may be included in the upmix parametric data). Thus, in a synthesis apparatus, the opposite rotation may be performed to reconstruct the stereo signal. The rotation of the stereo signal results in another stereo signal of which one channel is accordingly aligned with the maximum intensity. The other channel is typically discarded in a Parametric Stereo encoder in order to reduce the data rate. In conventional PS decoding, a decorrelated signal is typically generated at the decoder and used for the upmixing process. In the current training approach this second signal may be used as a residual signal for the downmixing as it may represent the information discarded in the encoder, and thus it represents the ideal signal to be reconstructed in the decoder as part of an upmixing process.

Thus, in some embodiments, a training processor may from training multichannel audio signals generate training downmix signals and/or training residual signals. The training downmix signals may be fed to an arrangement of the source artificial neural network 405 and the synthesis artificial neural network 107, or equivalently to the source subband artificial neural networks and synthesis subband artificial neural networks arrangements, i.e. the samples of the training downmix audio signal is fed to the neural networks using the same processing as that applied to the downmix audio signal by the audio apparatus during normal operation (e.g. including subband filtering etc).

Thus, in the approach a joint training of a source (subband) artificial neural network and a synthesis (subband) artificial neural network may be applied where the input samples that are fed to artificial neural networks in the source audio apparatus and the synthesis audio apparatus are generated in the same way for the training multichannel audio signals as they would be for actual signals when the apparatuses are in normal operation. The artificial neural networks of the source audio apparatus and the synthesis audio apparatus are accordingly trained together and the weights etc. of both artificial neural networks are adapted together. In cases, where only one of the apparatuses is available, a training setup may be used where the missing artificial neural network is emulated/ copied by a dedicated training artificial neural network.

For example, if the source audio apparatus is trained independently of the synthesis audio apparatus, then the training setup may include functionality of a standard or typical synthesis audio apparatus (e.g. it may include an artificial neural network corresponding to the synthesis artificial neural network). In such cases, references to synthesis audio apparatus features in the following may be considered to refer to corresponding features in the training setup.

Similarly, if the synthesis audio apparatus is trained independently of any source audio apparatus, then the training setup may include functionality of a standard or typical source audio apparatus (e.g. it may include an artificial neural network corresponding to the source artificial neural network). In such cases, references to source audio apparatus features in the following may be considered to refer to corresponding features in the training setup.

An output from the neural network operation is then determined and a cost function is applied to determine a cost value for each training downmix audio signal and/or for the combined set of training downmix audio signals (e.g. an average cost value for the training sets is determined). The cost function may include various components.

Typically, the cost function will include at least one component that reflects how close a generated signal is to a reference signal, i.e. a so-called reconstruction error. In some embodiments the cost function will include at least one component that reflects how close a generated signal is to a reference signal from a perceptual point of view.

For example, in some embodiments, the auxiliary audio signal generated by the synthesis artificial neural network 107 for a given training downmix audio signal/ multichannel audio signal may be compared to the residual signal for that training downmix audio signal/ multichannel audio signal. A cost function contribution/ combination may be generated that reflects the difference between the generated auxiliary audio signal and the reference residual signal. This process may be generated for all training sets to generate an overall cost function.

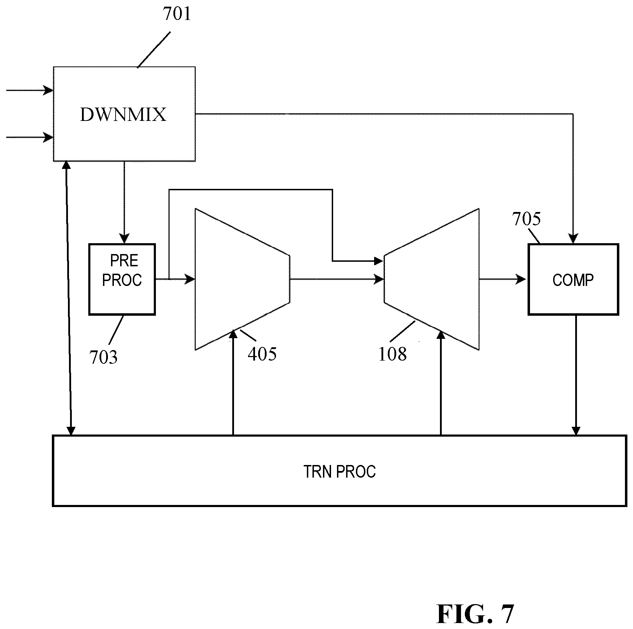

Such an example is illustrated in FIG. 7. In the example, a downmixer 701 may receive training multichannel audio signals, which in the specific example are stereo signals. For a given training signal, the downmixer 701 performs a downmixing operation to generate a training downmix signal, which in the specific example is a training mono audio signal. The downmix audio signal is fed to a preprocessor 703 which specifically may generate downmix audio signal samples for being input to the artificial neural networks. The preprocessor 703 specifically performs the same operations as are performed in the source audio apparatus and/or synthesis apparatus to generate samples for the artificial neural networks, and indeed typically the same functionality may be used, i.e. the functions to generate the artificial neural network input samples are also used during the training process.

The output of the preprocessor 703 is fed to the source artificial neural network 405 and the synthesis artificial neural network 107 in the same way as in the audio apparatus of FIG. 1. The source artificial neural network 405 and synthesis artificial neural network 107 are coupled to each other such that the output set of control data values generated by the source artificial neural network 405 are fed to the synthesis artificial neural network 107. The output of the synthesis artificial neural network 107 thus corresponds to samples of the auxiliary audio signal generated for the training downmix audio signal.

Thus, for a given training multichannel audio signal, the training system of FIG. 7 performs the same operations as the audio apparatuses of FIG. 1 and 4 thereby generating an auxiliary audio signal that would be generated by the audio apparatuses if the artificial neural networks had the same data/ configuration (coefficients, bias, etc).

The output of the synthesis artificial neural network 107 is fed to a comparator 705 which proceeds to compare the generated auxiliary audio signal to the residual signal generated by the downmixer 701. As mentioned, the residual signal would in principle allow substantially perfect reconstruction of the multichannel audio signal and can accordingly be considered a close approximation of the ideal auxiliary audio signal. The comparison between the generated auxiliary audio signal and the residual signal thus provides an indication of how advantageous the generated auxiliary audio signal is. A cost value may accordingly be determined based on the comparison, and specifically the higher the difference the higher the cost value.

It will be appreciated that many different approaches may be used to determine the cost value reflecting difference between the signals. For example, a correlation may be performed with the cost value having a monotonically decreasing value for the increasing correlation value. As another example, the two signals may be subtracted from each other and a power measure for the difference signal may be used as a cost value. It will be appreciated that many other approaches are available and may be used.

Thus, in the example, the cost function generates a cost value that reflects how closely the generated auxiliary audio signals match the corresponding residual signals for the training multichannel audio signals.

Based on the cost value, the training processor 707 may adapt the weights of the artificial neural networks. For example, a back-propagation approach may be used. In particular, the training processor 707 may adjust the weights of both the source artificial neural network 405 and the synthesis artificial neural network 107 based on the cost value. For example, given the derivative (representing the slope) of the weights with respect to the cost function the weights values are modified to go in the direction of the slope. For a simple/minima account one can refer to the training of the perceptron (single neuron) in case of backward pass of a single data input.

The process may be iterated until the artificial neural networks are considered to be trained. For example, training may be performed for a predetermined number of iterations. As another example, training may be continued until the weights change be less than a predetermined amount. Also very common, a validation stop is implemented where the network is tested again a validation metric and stopped when reaching the expected outcome.

As a specific example, a stereo signal may be fed to a traditional PS downmix module, that generates both the downmix as well as the ideal residual signal, i.e., the residual signal that would allow for (near-)perfect reconstruction of the waveform at the decoder side. Using pairs of mono signals and residual signals, a source artificial neural network 405 generates a set of control data values that may provide a latent representation of the audio signal (frame). This set of control data values is with the mono audio signal fed to the synthesis artificial neural network 107 which generates the auxiliary audio signal. When the artificial neural networks are sufficiently deep, this arrangement may be trained using e.g. an RMSE (Root Mean Square Error for the auxiliary audio signal relative to the residual signal) like cost-function, resulting in the artificial neural network arrangement learning what the auxiliary audio signal should be for a given a mono audio signal.

In the arrangement the source artificial neural network 405 and the synthesis artificial neural network 107 are accordingly jointly trained using the same downmix audio signal and cost function. The weights of both the source artificial neural network 405 and synthesis artificial neural network 107 are updated based on the same training data and the same cost function and downmix audio signal.

In many embodiments, the residual signal may be used directly when comparing to the generated auxiliary audio signal. However, more generally a target audio signal generated from the residual audio signal may be generated and used in the comparison to the generated auxiliary audio signal. The target audio signal may be generated by applying a function or signal processing application to the residual signal. For example, a scaling/ level setting of the residual audio signal may be applied to generate a target audio signal. As another example, a filter operation may be applied to the residual audio signal to generate the target audio signal. As another example, scaling may be applied to the residual signal to minimize the difference to the generated auxiliary audio signal and/or maximize the correlation.

In some embodiments, the cost function may alternatively or additionally be arranged to reflect a difference between the training multichannel audio signal and a multichannel audio signal generated by upmixing the downmix audio signal and the generated auxiliary audio signal. **In** such an example, the downmixer 701 may also generate upmix parametric data which may be used in the upmixing. Thus, in some embodiments, rather than just train the artificial neural networks to generate an auxiliary audio signal that matches the residual signal, the training may include reconstruction of the multichannel audio signal based on the generated auxiliary audio signal. The generation of the output multichannel audio signal may specifically be performed using the same operations as those that will be performed in an encoder. This output multichannel audio signal may then be compared to the input multichannel audio signal. Thus, in some embodiments, rather than the training data essentially comprising training downmix audio signals, the training data may alternatively or additionally comprise the multichannel audio signal. The cost function may be based on a comparison of the generated auxiliary audio signal e.g. to a residual signal, or may e.g. be based on a comparison between the original training multichannel audio signals and the reconstructed multichannel audio signals.

In some embodiments, the cost function may further consider other parameters. For example, in some embodiments, the cost function may further include a consideration of a degree of correlation between the generated auxiliary audio signal and the downmix signal. In particular, the cost function may indicate a lower cost the more decorrelated the downmix audio signal and the auxiliary audio signal are. An increased decorrelation may indicate that less common information is present in both of the two signals.

In embodiments where a subband operation is performed, the described approach may be performed for each subband. Specifically, a residual audio signal may be generated for each subband and compared to the generated auxiliary audio signal subband samples for that subband. Thus, a cost function may be evaluated for each subband to determine a cost value and the coefficients of the source subband artificial neural network and synthesis subband artificial neural network of that subband may be trained.

In many embodiments, the source subband artificial neural networks, and/or indeed the source artificial neural network 405, may generate set of control data values that match the time and frequency resolution of the synthesis subband artificial neural networks, including specifically the synthesis artificial neural network 107 if only one artificial neural network is used. However, in other embodiments, the time and/or frequency resolution of the generated sets of control data values may differ, and typically the resolution may be lower for the sets of control data values. In such situations functionality may be included to modify the resolution. In particular, interpolators may be incorporated to generate interpolated sets of parameter values from the generated parameter values.

The audio apparatus(s) may specifically be implemented in one or more suitably programmed processors. In particular, the artificial neural networks may be implemented in one more such suitably programmed processors. The different functional blocks, and in particular the artificial neural networks, may be implemented in separate processors and/or may e.g. be implemented in the same processor. An example of a suitable processor is provided in the following.

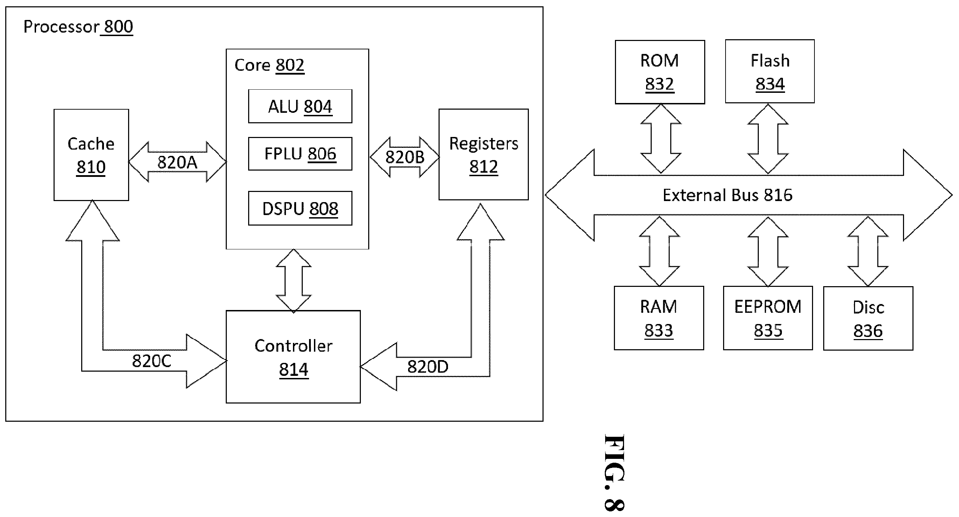

FIG. 8 is a block diagram illustrating an example processor 800 according to embodiments of the disclosure. Processor 800 may be used to implement one or more processors implementing an apparatus as previously described or elements thereof (including in particular one more artificial neural network). Processor 800 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 800 may include one or more cores 802. The core 802 may include one or more Arithmetic Logic Units (ALU) 804. In some embodiments, the core 802 may include a Floating Point Logic Unit (FPLU) 806 and/or a Digital Signal Processing Unit (DSPU) 808 in addition to or instead of the ALU 804.

The processor 800 may include one or more registers 812 communicatively coupled to the core 802. The registers 812 may be implemented using dedicated logic gate circuits (e.g., flip-flops) and/or any memory technology. In some embodiments the registers 812 may be implemented using static memory. The register may provide data, instructions and addresses to the core 802.

In some embodiments, processor 800 may include one or more levels of cache memory 810 communicatively coupled to the core 802. The cache memory 810 may provide computer-readable instructions to the core 802 for execution. The cache memory 810 may provide data for processing by the core 802. In some embodiments, the computer-readable instructions may have been provided to the cache memory 810 by a local memory, for example, local memory attached to the external bus 816. The cache memory 810 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 800 may include a controller 814, which may control input to the processor 800 from other processors and/or components included in a system and/or outputs from the processor 800 to other processors and/or components included in the system. Controller 814 may control the data paths in the ALU 804, FPLU 806 and/or DSPU 808. Controller 814 may be implemented as one or more state machines, data paths and/or dedicated control logic. The gates of controller 814 may be implemented as standalone gates, FPGA, ASIC or any other suitable technology.

The registers 812 and the cache 810 may communicate with controller 814 and core 802 via internal connections 820A, 820B, 820C and 820D. Internal connections may be implemented as a bus, multiplexer, crossbar switch, and/or any other suitable connection technology.

Inputs and outputs for the processor 800 may be provided via a bus 816, which may include one or more conductive lines. The bus 816 may be communicatively coupled to one or more components of processor 800, for example the controller 814, cache 810, and/or register 812. The bus 816 may be coupled to one or more components of the system.

The bus 816 may be coupled to one or more external memories. The external memories may include Read Only Memory (ROM) 832. ROM 832 may be a masked ROM, Electronically Programmable Read Only Memory (EPROM) or any other suitable technology. The external memory may include Random Access Memory (RAM) 833. RAM 833 may be a static RAM, battery backed up static RAM, Dynamic RAM (DRAM) or any other suitable technology. The external memory may include Electrically Erasable Programmable Read Only Memory (EEPROM) 835. The external memory may include Flash memory 834. The External memory may include a magnetic storage device such as disc 836. In some embodiments, the external memories may be included in a system.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

**Claims**

1. An apparatus for generating a multi-channel audio signal, the apparatus comprising:
   a receiver (101) for receiving a data signal comprising:

   a downmix audio signal for the multi-channel signal;
   upmix parametric data for upmixing the downmix audio signal;
   a set of control data values for adapting a processing to generate an auxiliary signal for upmixing from the down-mix audio signal;
   the apparatus is **characterised by** further comprising:

   an artificial neural network (107) having input nodes for receiving samples of the downmix audio signal and output nodes arranged to provide samples of the auxiliary audio signal, the artificial neural network (107) further comprising nodes arranged to include contributions from the set of control data values; and
   a generator (105) arranged to generate the multichannel audio signal from the downmix signal and the auxiliary signal in dependence on the upmix parametric data.

2. The apparatus of claim 1 further comprising a filter bank (401) arranged to generate a frequency subband representation of the downmix audio signal; and wherein the samples of the downmix audio signal are subband samples of the frequency subband representation.

3. The apparatus of claim 2 wherein the artificial neural network (107) is an artificial neural network of a first plurality of subband artificial neural networks, each subband artificial neural network of the first plurality of subband neural networks being arranged to generate subband samples for a subset of subbands of a frequency subband representation of the auxiliary audio signal.

4. The apparatus of claim 3 wherein at least one control data value of the set of control data values is processed by at least two artificial neural networks of the first plurality of subband artificial neural networks.

5. The apparatus of claim 3 wherein at least one control data value of the of control data values is not processed by at least one artificial neural network of the first plurality of subband artificial neural networks.

6. The apparatus of claim 1 where the artificial neural network (107) is trained by training data including at least one of training multichannel audio signals and training downmix audio signals and training upmix parametric data generated from training multichannel audio signals; the training employing a cost function comparing the training multichannel audio signals to upmixed multi-channel signals generated, using the training upmix parametric data, from the training downmix signals and from generated auxiliary audio signals.

7. The apparatus of any previous claim wherein the artificial neural network (107) is trained by training data having training input data comprising training downmix audio signals of training multichannel audio signals and training sets of control data values for the training downmix audio signals, and using a cost function including a contribution indicative of a difference between training auxiliary audio signals generated by the artificial neural network in response to the training data and training residual signals for the training downmix audio signals.

8. The apparatus of claim 7 wherein the cost function further includes a contribution indicating a degree of correlation between the auxiliary audio signals and the downmixes of multi-channel signals.

9. The apparatus of any previous claim further comprising an upsampler for temporally upsampling the set of control data values and wherein the artificial neural network (107) is arranged to include contributions from upsampled control data values.

10. An apparatus for generating a data signal representing multichannel audio signal, the apparatus comprising:

    a downmixer arranged to generate a downmix audio signal by downmixing the multichannel audio signal, the downmixer further being arranged to generate upmix parametric data for upmixing of the downmix audio;
    the apparatus is **characterised by** further comprising:

    an artificial neural network arranged to generate a set of control data values for adapting a processing to generate an auxiliary audio signal for upmixing from the downmix audio signal, the artificial neural network having output nodes for providing the set of control data values and input nodes for receiving samples of at least one of the downmix audio signal and the multichannel audio signal;

a generator arranged to generate the data signal to comprise the downmix audio signal, the upmix parametric data, and the set of control data values.

11. The apparatus of claim 10 wherein the set of control data values provides a latent representation of at least one of the downmix audio signal and the multi-channel audio signal.

12. The apparatus of claim 10 or claim 11 wherein the artificial neural network is trained by training data having training input data being samples of training audio signals being at least one of a multichannel audio signal and a downmix of a multichannel audio signal, and using a cost function including a component indicative of a difference between the training audio signals and output audio signals generated from sets of control data values generated by the artificial neutral network for the training audio signals.

13. The apparatus of claim 12 wherein the output audio signals are outputs of a synthesis artificial neural network having input nodes receiving the sets control data values generated by the artificial neutral network for the training audio signals, and the artificial neural network and the synthesis artificial neural network are jointly trained.

14. The apparatus of claim 12 or 13 wherein the training audio signals and output audio signals are downmix audio channels.

15. A method of generating a multi-channel audio signal, the method comprising:
receiving a data signal comprising:

a downmix audio signal for the multi-channel signal;
upmix parametric data for upmixing the downmix audio signal;
a set of control data values for adapting a processing to generate an auxiliary signal for upmixing from the downmix audio signal;
the method being **characterised by** further comprising: operating an artificial neural network (107) having input nodes receiving samples of the downmix audio signal and output nodes providing samples of the auxiliary audio signal, the artificial neural network (107) further comprising nodes arranged to include contributions from the set of control data values; and
generating the multichannel audio signal from the downmix signal and the auxiliary signal in dependence on the upmix parametric data.

16. A method of generating a data signal representing multichannel audio signal, the method comprising:

generating a downmix audio signal by downmixing the multichannel audio signal, the downmixer further being arranged to generate upmix parametric data for upmixing of the downmix audio;
the method being **characterised by** further comprising: operating an artificial neural network generating a set of control data values for adapting a processing to generate an auxiliary audio signal for upmixing from the downmix audio signal, the artificial neural network having output nodes providing the set of control data values and input nodes receiving samples of at least one of the downmix audio signal and the multichannel audio signal;
generating the data signal to comprise the downmix audio signal, the upmix parametric data, and the set of control data values.

17. A computer program product comprising computer program code means adapted to perform all the steps of claims 15 or 16 when said program is run on a computer.

**Patentansprüche**

1. Einrichtung zum Generieren eines Mehrkanal-Audiosignals, wobei die Einrichtung Folgendes umfasst:

einen Empfänger (101) zum Empfangen eines Datensignals, umfassend:

ein Downmix-Audiosignal für das Mehrkanalsignal;

parametrische Upmix-Daten zum Upmixing des Downmix-Audiosignals;
einen Satz von Steuerdatenwerten zum Anpassen einer Verarbeitung, um ein Hilfssignal für das Upmixing aus dem Downmix-Audiosignal zu generieren;

wobei die Einrichtung **dadurch gekennzeichnet ist, dass** sie ferner Folgendes umfasst:

ein künstliches neuronales Netz (107), das Eingangsknoten zum Empfangen von Abtastwerten des Downmix-Audiosignals und Ausgangsknoten aufweist, die dazu eingerichtet sind, Abtastwerte des Hilfsaudiosignals bereitzustellen, wobei das künstliche neuronale Netz (107) ferner Knoten umfasst, die dazu eingerichtet sind, Beiträge aus dem Satz von Steuerdatenwerten zu beinhalten; und
einen Generator (105), der dazu eingerichtet ist, aus dem Downmix-Signal und dem Hilfssignal in Abhängigkeit von den parametrischen Upmix-Daten das Mehrkanal-Audiosignal zu generieren.

**2.** Einrichtung nach Anspruch 1, die ferner eine Filterbank (401) umfasst, die dazu eingerichtet ist, eine Frequenzteilbanddarstellung des Downmix-Audiosignals zu generieren; und wobei die Abtastwerte des Downmix-Audiosignals Teilbandabtastwerte der Frequenzteilbanddarstellung sind.

**3.** Einrichtung nach Anspruch 2, wobei es sich bei dem künstlichen neuronalen Netz (107) um ein künstliches neuronales Netz aus einer ersten Vielzahl von künstlichen neuronalen Teilbandnetzen handelt, wobei jedes künstliche neuronale Teilbandnetz der ersten Vielzahl von neuronalen Teilbandnetzen dazu eingerichtet ist, Teilbandabtastwerte für einen Teilsatz von Teilbändern einer Frequenzteilbanddarstellung des Hilfsaudiosignals zu generieren.

**4.** Einrichtung nach Anspruch 3, wobei mindestens ein Steuerdatenwert aus dem Satz von Steuerdatenwerten von mindestens zwei künstlichen neuronalen Netzen der ersten Vielzahl von künstlichen neuronalen Teilbandnetzen verarbeitet wird.

**5.** Einrichtung nach Anspruch 3, wobei mindestens ein Steuerdatenwert aus den Steuerdatenwerten von mindestens einem künstlichen neuronalen Netz der ersten Vielzahl von künstlichen neuronalen Teilbandnetzen nicht verarbeitet wird.

**6.** Einrichtung nach Anspruch 1, wobei das künstliche neuronale Netz (107) mit Trainingsdaten, die mindestens eines von Trainings-Mehrkanal-Audiosignalen und Trainings-Downmix-Audiosignalen beinhalten, und parametrischen Trainings-Upmix-Daten, die aus Trainings-Mehrkanal-Audiosignalen generiert wurden, trainiert wird; das Training eine Kostenfunktion einsetzt, die die Trainings-Mehrkanal-Audiosignale mit Upmix-Mehrkanal-Signalen vergleicht, die unter Verwendung der parametrischen Trainings-Upmix-Daten aus den Trainings-Downmix-Signalen und aus generierten Hilfsaudiosignalen generiert werden.

**7.** Einrichtung nach einem vorstehenden Anspruch, wobei das künstliche neuronale Netz (107) mit Trainingsdaten, die Trainingseingangsdaten aufweisen, die Trainings-Downmix-Audiosignale von Trainings-Mehrkanal-Audiosignalen und Trainingssätze von Steuerdatenwerten für die Trainings-Downmix-Audiosignale umfassen, und unter Verwendung einer Kostenfunktion trainiert wird, die einen Beitrag beinhaltet, der eine Differenz zwischen Trainings-Hilfsaudiosignalen, die vom künstlichen neuronalen Netz infolge der Trainingsdaten generiert werden, und Trainings-Restsignalen für die Trainings-Downmix-Audiosignale angibt.

**8.** Einrichtung nach Anspruch 7, wobei die Kostenfunktion ferner einen Beitrag beinhaltet, der einen Korrelationsgrad zwischen den Hilfsaudiosignalen und den Downmixes von Mehrkanalsignalen angibt.

**9.** Einrichtung nach einem vorstehenden Anspruch, das ferner einen Upsampler zum zeitlichen Upsampling des Satzes von Steuerdatenwerten umfasst, und wobei das künstliche neuronale Netz (107) dazu eingerichtet ist, Beiträge aus upgesampelten Steuerdatenwerten zu beinhalten.

**10.** Einrichtung zum Generieren eines Datensignals, das ein Mehrkanal-Audiosignal darstellt, wobei die Einrichtung Folgendes umfasst:

einen Downmixer, der dazu eingerichtet ist, durch Downmixing des Mehrkanal-Audiosignals ein Downmix-Audiosignal zu generieren, wobei der Downmixer ferner dazu eingerichtet ist, parametrische Upmix-Daten für Upmixing des Downmix-Audiosignals zu generieren;
wobei die Einrichtung **dadurch gekennzeichnet ist, dass** sie ferner Folgendes umfasst:

ein künstliches neuronales Netz, das dazu eingerichtet ist, einen Satz von Steuerdatenwerten zum Anpassen einer Verarbeitung zu generieren, um ein Hilfsaudiosignal zum Upmixing vom Downmix-Audiosignal zu generieren, wobei das künstliche neuronale Netz Ausgangsknoten zum Bereitstellen des Satzes von Steuerdatenwerten und Eingangsknoten zum Empfangen von Abtastwerten mindestens eines des Downmix-Audiosignals und des Mehrkanal-Audiosignals aufweist;

einen Generator, der dazu eingerichtet ist, das Datensignal so zu generieren, dass es das Downmix-Audiosignal, die parametrischen Upmix-Daten und den Satz von Steuerdatenwerten umfasst.

11. Einrichtung nach Anspruch 10, wobei der Satz von Steuerdatenwerten eine latente Darstellung mindestens eines des Downmix-Audiosignals und des Mehrkanal-Audiosignals bereitstellt.

12. Einrichtung nach Anspruch 10 oder Anspruch 11, wobei das künstliche neuronale Netz mit Trainingsdaten, die als Eingangsdaten Abtastwerte von Trainingsaudiosignalen aufweisen, die mindestens eines von einem Mehrkanal-Audiosignal und einem Downmix eines Mehrkanal-Audiosignals sind, und unter Verwendung einer Kostenfunktion trainiert wird, die eine Komponente beinhaltet, die eine Differenz zwischen den Trainingsaudiosignalen und den aus Sätzen von Steuerdatenwerten, die vom künstlichen neuronalen Netz für die Trainingsaudiosignale generiert werden, generierten Ausgangsaudiosignalen angibt.

13. Einrichtung nach Anspruch 12, wobei die Ausgangsaudiosignale Ausgänge eines synthetischen künstlichen neuronalen Netzes sind, das Eingangsknoten aufweist, die vom künstlichen neuronalen Netz für die Trainingsaudiosignale generierte Sätze von Steuerdatenwerten empfangen, und wobei das künstliche neuronale Netz und das synthetische künstliche neuronale Netz gemeinsam trainiert werden.

14. Einrichtung nach Anspruch 12 oder 13, wobei es sich bei den TrainingsAudiosignalen und den Ausgangsaudiosignalen um Downmix-Audiokanäle handelt.

15. Verfahren zum Generieren eines Mehrkanal-Audiosignals, wobei das Verfahren Folgendes umfasst:

Empfangen eines Datensignals, umfassend:

ein Downmix-Audiosignal für das Mehrkanalsignal;
parametrische Upmix-Daten zum Upmixing des Downmix-Audiosignals;
einen Satz von Steuerdatenwerten zum Anpassen einer Verarbeitung, um ein Hilfssignal für das Upmixing aus dem Downmix-Audiosignal zu generieren;

wobei das Verfahren **dadurch gekennzeichnet ist, dass** es ferner Folgendes umfasst:

Betreiben eines künstlichen neuronalen Netzes (107), das Eingangsknoten, die Abtastwerte des Downmix-Audiosignals empfangen, und Ausgangsknoten aufweist, die Abtastwerte des Hilfsaudiosignals bereitstellen, wobei das künstliche neuronale Netz (107) ferner Knoten umfasst, die dazu eingerichtet sind, Beiträge aus dem Satz von Steuerdatenwerten zu beinhalten; und
Generieren des Mehrkanal-Audiosignals aus dem Downmix-Signal und dem Hilfssignals in Abhängigkeit von den parametrischen Upmix-Daten.

16. Verfahren zum Generieren eines Datensignals, das ein Mehrkanal-Audiosignal darstellt, wobei das Verfahren Folgendes umfasst:

Generieren eines Downmix-Audiosignals durch Downmixing des Mehrkanal-Audiosignals, wobei der Downmixer ferner dazu eingerichtet ist, parametrische Upmix-Daten für Upmixing des Downmix-Audiosignals zu generieren;
wobei das Verfahren **dadurch gekennzeichnet ist, dass** es ferner Folgendes umfasst: Betreiben eines künstlichen neuronalen Netzes, einen Satz von Steuerdatenwerten zum Anpassen einer Verarbeitung zu generieren, um ein Hilfsaudiosignal zum Upmixing vom Downmix-Audiosignal zu generieren, wobei das künstliche neuronale Netz Ausgangsknoten, die den Satz von Steuerdatenwerten bereitstellen, und Eingangsknoten, die Abtastwerte von mindestens einem des Downmix-Audiosignals und des Mehrkanal-Audiosignals empfangen, aufweist;
Generieren des Datensignals, sodass es das Downmix-Audiosignal, die parametrischen Upmix-Daten und den Satz von Steuerdatenwerten umfasst.

**17.** Computerprogrammprodukt, das Computerprogrammcodemittel umfasst, die angepasst sind, alle Schritte nach Anspruch 15 oder 16 durchzuführen, wenn das Programm auf einem Computer läuft.

**Revendications**

**1.** Appareil de génération d'un signal audio multicanal, l'appareil comprenant :

un récepteur (101) pour recevoir un signal de données comprenant :

un signal audio de mixage réducteur pour le signal multicanal ;
des données paramétriques de mixage élévateur pour un mixage élévateur du signal audio de mixage réducteur ;
un ensemble de valeurs de données de commande pour adapter un traitement afin de générer un signal auxiliaire pour un mixage élévateur à partir du signal audio de mixage réducteur ;

l'appareil étant **caractérisé en ce qu'**il comprend en outre :

un réseau neuronal artificiel (107) présentant des nœuds d'entrée pour recevoir des échantillons du signal audio de mixage réducteur et des nœuds de sortie agencés pour fournir des échantillons du signal audio auxiliaire, le réseau neuronal artificiel (107) comprenant en outre des nœuds agencés pour inclure des contributions de l'ensemble de valeurs de données de commande ; et
un générateur (105) agencé pour générer le signal audio multicanal à partir du signal de mixage réducteur et du signal auxiliaire en fonction des données paramétriques de mixage élévateur.

**2.** Appareil selon la revendication 1 comprend en outre un banc de filtres (401) agencé pour générer une représentation de sous-bande de fréquence du signal audio de mixage réducteur ; et dans lequel les échantillons du signal audio de mixage réducteur sont des échantillons de sous-bande de la représentation de sous-bande de fréquence.

**3.** Appareil selon la revendication 2, dans lequel le réseau neuronal artificiel (107) est un réseau neuronal artificiel d'une première pluralité de réseaux neuronaux artificiels de sous-bande, chaque réseau neuronal artificiel de sous-bande de la première pluralité de réseaux neuronaux de sous-bande étant agencé pour générer des échantillons de sous-bande pour un sous-ensemble de sous-bandes d'une représentation de sous-bande de fréquence du signal audio auxiliaire.

**4.** Appareil selon la revendication 3, dans lequel au moins une valeur de données de commande de l'ensemble de valeurs de données de commande est traitée par au moins deux réseaux neuronaux artificiels de la première pluralité de réseaux neuronaux artificiels de sous-bande.

**5.** Appareil selon la revendication 3, dans lequel au moins une valeur de données de commande de l'ensemble de valeurs de données de commande n'est pas traitée par au moins un réseau neuronal artificiel de la première pluralité de réseaux neuronaux artificiels de sous-bande.

**6.** Appareil selon la revendication 1, dans lequel le réseau neuronal artificiel (107) est entraîné par des données d'entraînement incluant au moins un de signaux audio multicanaux d'entraînement et de signaux audio de mixage réducteur d'entraînement et de données paramétriques de mixage élévateur d'entraînement générées à partir de signaux audio multicanaux d'entraînement ; l'entraînement utilisant une fonction de coût comparant les signaux audio multicanaux d'entraînement aux signaux multicanaux de mixage élévateur générés, à l'aide des données paramétriques de mixage élévateur d'entraînement, à partir des signaux de mixage réducteur d'entraînement et à partir de signaux audio auxiliaires générés.

**7.** Appareil selon l'une quelconque des revendications précédentes, dans lequel le réseau neuronal artificiel (107) est entraîné par des données d'entraînement présentant des données d'entrée d'entraînement comprenant des signaux audio de mixage réducteur d'entraînement de signaux audio multicanaux d'entraînement et des ensembles d'entraînement de valeurs de données de commande pour les signaux audio de mixage réducteur d'entraînement, et utilisant une fonction de coût incluant une contribution indicative d'une différence entre des signaux audio auxiliaires d'entraînement générés par le réseau neuronal artificiel en réponse aux données d'entraînement et des signaux résiduels d'entraînement pour les signaux audio de mixage réducteur d'entraînement.

8. Appareil selon la revendication 7, dans lequel la fonction de coût inclut en outre une contribution indiquant un degré de corrélation entre les signaux audio auxiliaires et les mixages réducteurs de signaux multicanaux.

9. Appareil selon l'une quelconque des revendications précédents comprenant en outre un échantillonneur élévateur pour un échantillonnage élévateur temporellement de l'ensemble des valeurs de données de commande et dans lequel le réseau neuronal artificiel (107) est agencé pour inclure des contributions de valeurs de données de commande à échantillonnage élévateur.

10. Appareil de génération de signal de données représentant un signal audio multicanal, l'appareil comprenant :

un dispositif de mixage réducteur agencé pour générer un signal audio de mixage réducteur par mixage réducteur du signal audio multicanal, le dispositif de mixage réducteur étant en outre configuré pour générer des données paramétriques de mixage élévateur pour le mixage élévateur du signal audio de mixage réducteur ;
l'appareil étant **caractérisé en ce qu'**il comprend en outre :

un réseau neuronal artificiel agencé pour générer un ensemble de valeurs de données de commande afin d'adapter un traitement pour générer un signal audio auxiliaire pour un mixage élévateur à partir du signal audio de mixage réducteur, le réseau neuronal artificiel présentant des nœuds de sortie pour fournir l'ensemble des valeurs de données de commande et des nœuds d'entrée pour recevoir des échantillons d'au moins l'un du signal audio de mixage réducteur et du signal audio multicanal ;
un générateur agencé pour générer le signal de données comprenant le signal audio de mixage réducteur, les données paramétriques de mixage élévateur et l'ensemble des valeurs de données de commande.

11. Appareil selon la revendication 10, dans lequel l'ensemble de valeurs de données de commande fournit une représentation latente d'au moins l'un du signal audio de mixage réducteur et du signal audio multicanal.

12. Appareil selon la revendication 10 ou la revendication 11, dans lequel le réseau neuronal artificiel est entraîné par des données d'entraînement présentant des données d'entrée d'entraînement étant des échantillons de signaux audio d'entraînement qui sont au moins un parmi un signal audio multicanal et un mixage réducteur d'un signal audio multicanal, et utilisant une fonction de coût incluant une composante indicative d'une différence entre les signaux audio d'entraînement et les signaux audio de sortie générés à partir d'ensembles de valeurs de données de commande générés par le réseau neuronal artificiel pour les signaux audio d'entraînement.

13. Appareil selon la revendication 12, dans lequel les signaux audio de sortie sont des sorties d'un réseau neuronal artificiel de synthèse présentant des nœuds d'entrée recevant les ensembles de valeurs de données de commande générés par le réseau neuronal artificiel pour les signaux audio d'entraînement, et le réseau neuronal artificiel et le réseau neuronal artificiel de synthèse sont entraînés conjointement.

14. Appareil selon la revendication 12 ou 13, dans lequel les signaux audio d'entraînement et les signaux audio de sortie sont des canaux audio mixés.

15. Procédé de génération d'un signal audio multicanal, le procédé comprenant :

la réception d'un signal de données comprenant :

un signal audio de mixage réducteur pour le signal multicanal ;
des données paramétriques de mixage élévateur pour un mixage élévateur du signal audio de mixage réducteur ;
un ensemble de valeurs de données de commande pour adapter un traitement afin de générer un signal auxiliaire pour un mixage élévateur à partir du signal audio de mixage réducteur ;

le procédé étant **caractérisé par** ce qu'il comprend en outre :

l'actionnement d'un réseau neuronal artificiel (107) présentant des nœuds d'entrée recevant des échantillons du signal audio de mixage réducteur et des nœuds de sortie fournissant des échantillons du signal audio auxiliaire, le réseau neuronal artificiel (107) comprenant en outre des nœuds agencés pour inclure des contributions de l'ensemble de valeurs de données de commande ; et
la génération du signal audio multicanal à partir du signal de mixage réducteur et du signal auxiliaire en fonction des données paramétriques de mixage élévateur.

16. Procédé de génération d'un signal de données représentant un signal audio multicanal, le procédé comprenant :

la génération d'un signal audio de mixage réducteur par mixage réducteur du signal audio multicanal, le dispositif de mixage réducteur étant en outre agencé pour générer des données paramétriques de mixage élévateur pour le mixage élévateur du signal audio de mixage réducteur ;
le procédé étant **caractérisé en ce qu'**il comprend en outre : l'actionnement d'un réseau neuronal artificiel générant un ensemble de valeurs de données de commande afin d'adapter un traitement pour générer un signal audio auxiliaire pour un mixage élévateur à partir du signal audio de mixage réducteur, le réseau neuronal artificiel présentant des nœuds de sortie fournissant l'ensemble des valeurs de données de commande et des nœuds d'entrée recevant des échantillons d'au moins l'un du signal audio de mixage réducteur et du signal audio multicanal ;
la génération du signal de données comprenant le signal audio de mixage réducteur, les données paramétriques de mixage élévateur et l'ensemble des valeurs de données de commande.

17. Produit de programme informatique comprenant des moyens de code de programme informatique adaptés pour réaliser toutes les étapes des revendications 15 ou 16 lorsque ledit programme est exécuté sur un ordinateur.

**FIG. 1**

**FIG. 2**

$x_0$

$x_1$

$x_2$

$x_3$

...

$x_N$

$l$

$$l = \max\left(0, \sum_n w_n x_n\right)$$

**FIG. 3**

**FIG. 4**

**FIG. 5**

**FIG. 6**

**FIG. 7**

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021204085 A1

- US 2021191685 A1

**Non-patent literature cited in the description**

- **E. SCHUIJERS** ; **W. OOMEN** ; **B. DEN BRINKER** ; **J. BREEBAART**. Advances in Parametric Coding for High-Quality Audio. *114th AES Convention, Amsterdam, The Netherlands*, 2003
- **E. SCHUIJERS** ; **J. BREEBAART** ; **H. PURNHAGEN** ; **J. ENGDEGÅRD**. Low Complexity Parametric Stereo Coding. *116th AES, Berlin, Germany*, 2004
- Spatial Audio Processing - Ch. 6 MPEG Surround. **JEROEN BREEBAART et al.** Spatial Audio Processing. John Wiley & Sons, 01 January 2007, 93-115

- Subband-based upmixing of stereo to 5.1- channel audio signals using deep neural networks. **PARK SU YEON et al.** 2016 INTERNATIONAL CONFERENCE ON INFORMATION AND COMMUNICATION TECHNOLOGY CONVERGENCE (ICTC). IEEE, 19 October 2016, 377-380
- **XAVIER GLOROT** ; **ANTOINE BORDES** ; **YOSHUA BENGIO**. Proceedings of the Fourteenth International Conference on Artificial Intelligence and Statistics. *PMLR*, 2011, vol. 15, 315-323
- **OORD** ; **AARON VAN DEN** ; **SANDER DIELEMAN** ; **HEIGA ZEN** ; **KAREN SIMONYAN** ; **ORIOL VINYALS** ; **ALEX GRAVES** ; **NAL KALCHBRENNER** ; **ANDREW SENIOR** ; **KORAY KAVUKCUOGLU**. Wavenet: A generative model for raw audio. *arXiv:1609.03499*, 2016